# EUROPEAN PATENT APPLICATION

(11) **EP 4 438 748 A1**
(43) Date of publication of application: **02.10.2024**
(21) Application number: 24156478.0
(22) Date of filing: 08.02.2024
(51) Int. Cl.: C22B 1/00, C22B 1/02, C22B 5/04, C22B 7/00, C22B 9/00, C22B 15/00, C22B 21/00, C22B 23/02, C22B 26/12, C22B 47/00, H01M 10/54

(54) **METHOD AND SYSTEM FOR RECYCLING WASTE LITHIUM ION BATTERY COMPRISING PARTIAL MELT SEPARATION PROCESS FOR LITHIUM ALLOY COMPOUND FORMATION AND GRAPHITE SEPARATION**

(30) Priority: 31.03.2023 KR 20230042399; 13.09.2023 KR 20230121827; 13.09.2023 KR 20230121828; 13.09.2023 KR 20230121829
(71) Applicant: KOREA INSTITUTE OF GEOSCIENCE AND MINERAL RESOURCES, Yuseong-gu Daejeon 34132 (KR)
(72) Inventor: KIM, Byung-Su, 55364 Wanju-gun Jeollabuk-do (KR); YOO, Jeonghyun, 34145 Daejeon (KR); CHOI, Ji-Hyuk, 30092 Sejong (KR); RYU, Taegong, 34090 Daejeon (KR); CHANG, Han Kwon, Daejeon (KR)
(74) Representative: Witte, Weller & Partner Patentanwälte mbB

(57) **Abstract**

The present disclosure provides a method for recycling a waste lithium ion battery, a method for smart recycling a waste lithium ion battery, and a system for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases.

## Description

### Technical Field

The present disclosure relates to a method for recycling a waste lithium ion battery, a method for smart recycling a waste lithium ion battery, and a system for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases.

### Background Art

Currently, the methods for recycling a waste lithium ion battery may be broadly divided into a method of drying shredded waste lithium ion battery cells, followed by sorting, to recycle same using a wet method, and a method of recycling shredded waste lithium ion battery cells using a dry method.

Among them, the latest dry method comprises melting and reduction volatilization of shredded waste lithium ion battery cells, separating copper, cobalt, nickel, manganese and the like as an alloy, separating lithium as dust, atomizing the separated alloy to prepare powder; and recovering copper, cobalt, nickel, manganese and the like using a wet method. The method further comprises treating the separated lithium dust by a wet method to recover lithium.

Therefore, the dry method has disadvantages in that the operating temperature for melting and reduction volatilization of complex compounds such as lithium, cobalt, nickel and manganese contained in shredded waste lithium ion battery cells is as high as 1450°C or higher, and a large amount of a slag forming agent such as CaO and SiO₂ is used as an additive to improve the melting point and fluidity of a slag.

In addition, the dry method has a disadvantage in that it burns all the graphite contained in the waste lithium ion battery cells and emits a large amount of carbon dioxide.

In addition, the dry method has a disadvantage in that it requires an atomizing process for manufacturing the separated alloy into powder in order to wet treat same.

In addition, the dry method has a disadvantage in that the slag from which lithium is separated in the melting and reduction volatilization processes has a very low concentration of lithium such that a large amount of residues are discharged and the recovery rate of lithium is low in the wet process for recovering lithium from the slag.

In addition, the dry method has a disadvantage in that a large amount of CaCl₂ or CaF₂ is used to separate lithium as dust in the melting and reduction volatilization processes such that corrosion of the equipment occurs and equipment maintenance costs are high.

Accordingly, the present applicant conducted various studies with great effort over a long period of time and obtained a method for recycling a waste lithium ion battery, a method for smart recycling a waste lithium ion battery, and a system for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, and has completed the present disclosure.

### Prior Art Citations

### Patent Citations

U.S. Patent Application Publication No. 2011/0036534 A1 (Publication Date: February 17, 2011)

### Summary of Invention

### Technical Problem

Accordingly, an objective of the present disclosure is to provide a method for recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases.

In addition, another objective of the present disclosure is to provide a method for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases.

In addition, another objective of the present disclosure is to provide a method for dry-recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases.

In addition, another objective of the present disclosure is to provide a smart system for recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases.

The objectives of the present disclosure are not limited to the objects described above and other objectives will be clearly understood by those skilled in the art from the following description.

### Solution to Problem

In order to achieve the above-described objectives, according to one aspect of the present disclosure, there is provided a method for recycling a waste lithium ion battery, comprising a partial melt separation process for lithium alloy compound formation and graphite separation, wherein the partial melt separation process comprises preparing a mixture of a lithium alloy compound in which lithium compounds, aluminum and copper are partially melted, a copper metal and an aluminum-copper alloy from waste lithium ion battery cell shreds, discharged waste lithium ion battery cells or waste lithium ion battery cases which comprise lithium compounds, aluminum, copper and graphite; and physically separating the graphite from the mixture of the lithium alloy compound, the copper metal and the aluminum-copper alloy.

According to one embodiment of the present disclosure, the method for recycling of the waste lithium ion battery, comprising the partial melt separation process for lithium alloy compound formation and graphite separation may comprise adding metal powder such as aluminum powder or copper powder to the mixture to partially melt same in the process of preparing the lithium alloy compound.

According to one embodiment of the present disclosure, the particle size of the metal powder such as aluminum powder or copper powder may be 0.1 to 10 mm.

According to one embodiment of the present disclosure, the lithium compound may be at least one selected from the group consisting of lithium iron phosphate (LiFePO₄), lithium nickel cobalt manganese oxide (Li(Ni,Co,Mn)O₂), lithium manganese oxide (LiMn₂O₄), lithium nickel cobalt aluminum oxide (Li(Ni,Co,Al)O₂) and lithium cobalt oxide (LiCoO₂).

According to one embodiment of the present disclosure, the graphite may be artificial graphite or natural graphite.

According to one embodiment of the present disclosure, the lithium alloy compound may be at least one selected from the group consisting of aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound, and aluminum-copper-lithium-cobalt-oxygen compound.

According to one embodiment of the present disclosure, the mixture of the lithium alloy compound, copper metal and aluminum-copper alloy may have spherical, needle-shaped or rod-shaped porous particles, and the particle size of the mixture of the lithium alloy compound, copper metal and aluminum-copper alloy may be 20 um to 5 mm.

According to one embodiment of the present disclosure, the partial melt separation process may comprise charging waste lithium ion battery cell shreds, discharged waste lithium ion battery cells or waste lithium ion battery cases which comprise lithium compounds, aluminum, copper and graphite into a melting furnace to prepare a mixture of a lithium alloy compound in which the lithium compounds, aluminum and copper are partially melted, a copper metal and an aluminum-copper alloy; and separating the graphite from the mixture of the lithium alloy compound, copper metal and aluminum-copper alloy by physical methods such as gravity selection, sieving and air suspension.

According to one embodiment of the present disclosure, the separation rate of lithium may be 95 to 99% by weight.

According to one embodiment of the present disclosure, the separation rate of cobalt may be 95 to 99% by weight.

According to one embodiment of the present disclosure, the separation rate of nickel may be 95 to 99% by weight.

According to one embodiment of the present disclosure, the separation rate of manganese may be 95 to 99% by weight.

According to one embodiment of the present disclosure, the separation rate of iron may be 90 to 96% by weight.

According to one embodiment of the present disclosure, the separation rate of aluminum may be 95 to 99% by weight.

According to one embodiment of the present disclosure, the separation rate of copper may be 75 to 90% by weight.

According to one embodiment of the present disclosure, the separation rate of graphite may be 70 to 95% by weight.

In addition, according to another aspect of the present disclosure, there is provided a method for recycling a waste lithium ion battery, comprising a partial melt separation process for lithium alloy compound formation and graphite separation, wherein the waste lithium ion battery comprises lithium compounds, aluminum, copper and graphite, and the method comprises: (a-1) preparing waste lithium ion battery cell shreds, discharged waste lithium ion battery cells or waste lithium ion battery cases; (a-2) charging the waste lithium ion battery cell shreds, discharged waste lithium ion battery cells or waste lithium ion battery cases into a melting furnace under air or an inert gas, followed by heating, to prepare a mixture of a lithium alloy compound in which lithium compounds, aluminum and copper are partially melted, a copper metal and an aluminum-copper alloy; and (a-3) separating the graphite from the mixture of the lithium alloy compound, copper metal and aluminum-copper alloy by physical methods such as gravity selection, sieving and air suspension.

According to one embodiment of the present disclosure, in the step of (a-1) preparing waste lithium ion battery cell shreds, discharged waste lithium ion battery cells or waste lithium ion battery cases, waste lithium ion battery cells may be shredded by a jaw crusher, a cone crusher, a rod mill, a pin mill, a ball mill, a tube mill, a pot mill, a roller mill, a turbo mill or a tower mill, under an inert gas to prepare the waste lithium ion battery cell shreds, and waste lithium ion batteries are discharged in water to prepare the discharged waste lithium ion battery cells.

According to one embodiment of the present disclosure, in the step of (a-1) preparing waste lithium ion battery cell shreds, discharged waste lithium ion battery cells or waste lithium ion battery cases, metal powder such as aluminum powder or copper powder may be added to the waste lithium ion battery cell shreds, discharged waste lithium ion battery cells or waste lithium ion battery cases, and the particle size of the metal powder such as aluminum powder or copper powder may be 0.1 to 10 mm.

According to one embodiment of the present disclosure, in the step of (a-2) charging the waste lithium ion battery cell shreds, discharged waste lithium ion battery cells or waste lithium ion battery cases into a melting furnace under air or an inert gas, followed by heating, to prepare a mixture of a lithium alloy compound in which lithium compounds, aluminum and copper are partially melted, a copper metal and an aluminum-copper alloy, the inert gas may be nitrogen, argon or neon, the heating temperature of the melting furnace may be 900 °C to 1250 °C, and the heating time of the melting furnace may be 10 minutes to 6 hours.

According to one embodiment of the present disclosure, in the step of (a-3) separating the graphite from the mixture of the lithium alloy compound, copper metal and aluminum-copper alloy by physical methods such as gravity selection, sieving and air suspension, the size of the sieve net during the sieving process may be 20 um to 210 um.

According to one embodiment of the present disclosure, the lithium compound may be at least one selected from the group consisting of lithium iron phosphate (LiFePO₄), lithium nickel cobalt manganese oxide (Li(Ni,Co,Mn)O₂), lithium manganese oxide (LiMn₂O₄), lithium nickel cobalt aluminum oxide (Li(Ni,Co,Al)O₂) and lithium cobalt oxide (LiCoO₂).

According to one embodiment of the present disclosure, the graphite may be artificial graphite or natural graphite.

According to one embodiment of the present disclosure, the lithium alloy compound may be at least one selected from the group consisting of aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound, and aluminum-copper-lithium-cobalt-oxygen compound.

According to one embodiment of the present disclosure, the mixture of the lithium alloy compound, copper metal and aluminum-copper alloy may have spherical, needle-shaped or rod-shaped porous particles, and the particle size of the mixture of the lithium alloy compound, copper metal and aluminum-copper alloy may be 20 um to 5 mm.

According to one embodiment of the present disclosure, the partial melt separation process may comprise preparing a mixture of a lithium alloy compound in which the lithium compounds, aluminum and copper are partially melted, a copper metal and an aluminum-copper alloy from waste lithium ion battery cell shreds, discharged waste lithium ion battery cells or waste lithium ion battery cases which comprise lithium compounds, aluminum, copper and graphite; and separating the graphite from the mixture of the lithium alloy compound, copper metal and aluminum-copper alloy by physical methods such as gravity selection, sieving and air suspension.

According to one embodiment of the present disclosure, the separation rate of lithium may be 95 to 99% by weight.

According to one embodiment of the present disclosure, the separation rate of cobalt may be 95 to 99% by weight.

According to one embodiment of the present disclosure, the separation rate of nickel may be 95 to 99% by weight.

According to one embodiment of the present disclosure, the separation rate of manganese may be 95 to 99% by weight.

According to one embodiment of the present disclosure, the separation rate of iron may be 90 to 96% by weight.

According to one embodiment of the present disclosure, the separation rate of aluminum may be 95 to 99% by weight.

According to one embodiment of the present disclosure, the separation rate of copper may be 75 to 90% by weight.

According to one embodiment of the present disclosure, the separation rate of graphite may be 70 to 95% by weight.

In addition, according to another aspect of the present disclosure, there is provided a method for smart recycling a waste lithium ion battery, comprising a partial melt separation process for lithium alloy compound formation and graphite separation, wherein the partial melt separation process comprises preparing a mixture of a lithium alloy compound in which lithium compounds, aluminum and copper are partially melted, a copper metal and an aluminum-copper alloy from waste lithium ion battery cell shreds, discharged waste lithium ion battery cells or waste lithium ion battery cases; and physically separating the graphite from the mixture of the lithium alloy compound, the copper metal and the aluminum-copper alloy, and the particle size of the mixture of the lithium alloy compound, copper metal and aluminum-copper alloy may be 20 um to 5 mm.

According to one embodiment of the present disclosure, the method for smart recycling of the waste lithium ion battery may comprise adding metal powder such as aluminum powder or copper powder to the mixture to partially melt same in the process of preparing the lithium alloy compound.

According to one embodiment of the present disclosure, the particle size of the metal powder such as aluminum powder or copper powder may be 0.1 to 10 mm.

According to one embodiment of the present disclosure, the lithium compound may be at least one selected from the group consisting of lithium iron phosphate (LiFePO₄), lithium nickel cobalt manganese oxide (Li(Ni,Co,Mn)O₂), lithium manganese oxide (LiMn₂O₄), lithium nickel cobalt aluminum oxide (Li(Ni,Co,Al)O₂) and lithium cobalt oxide (LiCoO₂).

According to one embodiment of the present disclosure, the graphite may be artificial graphite or natural graphite.

According to one embodiment of the present disclosure, the lithium alloy compound may be at least one selected from the group consisting of aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound, and aluminum-copper-lithium-cobalt-oxygen compound.

According to one embodiment of the present disclosure, the mixture of the lithium alloy compound, copper metal and aluminum-copper alloy may have spherical, needle-shaped or rod-shaped porous particles, and the particle size of the mixture of the lithium alloy compound, copper metal and aluminum-copper alloy may be 20 um to 5 mm.

According to one embodiment of the present disclosure, the partial melt separation process may comprise charging waste lithium ion battery cell shreds, discharged waste lithium ion battery cells or waste lithium ion battery cases which comprise lithium compounds, aluminum, copper and graphite into a melting furnace to prepare a mixture of a lithium alloy compound in which the lithium compounds, aluminum and copper are partially melted, a copper metal and an aluminum-copper alloy; and separating the graphite from the mixture of the lithium alloy compound, copper metal and aluminum-copper alloy by physical methods such as gravity selection, sieving and air suspension.

According to one embodiment of the present disclosure, the separation rate of lithium may be 95 to 99% by weight.

According to one embodiment of the present disclosure, the separation rate of cobalt may be 95 to 99% by weight.

According to one embodiment of the present disclosure, the separation rate of nickel may be 95 to 99% by weight.

According to one embodiment of the present disclosure, the separation rate of manganese may be 95 to 99% by weight.

According to one embodiment of the present disclosure, the separation rate of iron may be 90 to 96% by weight.

According to one embodiment of the present disclosure, the separation rate of aluminum may be 95 to 99% by weight.

According to one embodiment of the present disclosure, the separation rate of copper may be 75 to 90% by weight.

According to one embodiment of the present disclosure, the separation rate of graphite may be 70 to 95% by weight.

According to another aspect of the present disclosure, there is provided a method for smart recycling a waste lithium ion battery, comprising a partial melt separation process for lithium alloy compound formation and graphite separation, wherein the waste lithium ion battery comprises lithium compounds, aluminum, copper and graphite, and the method comprises: (a-1) preparing waste lithium ion battery cell shreds, discharged waste lithium ion battery cells or waste lithium ion battery cases; (a-2) charging the waste lithium ion battery cell shreds, discharged waste lithium ion battery cells or waste lithium ion battery cases into a melting furnace under air or an inert gas, followed by heating, to prepare a mixture of a lithium alloy compound in which lithium compounds, aluminum and copper are partially melted, a copper metal and an aluminum-copper alloy; and (a-3) separating the graphite from the mixture of the lithium alloy compound, copper metal and aluminum-copper alloy by physical methods such as gravity selection, sieving and air suspension.

According to one embodiment of the present disclosure, in the step of (a-1) preparing waste lithium ion battery cell shreds, discharged waste lithium ion battery cells or waste lithium ion battery cases, waste lithium ion battery cells may be shredded by a jaw crusher, a cone crusher, a rod mill, a pin mill, a ball mill, a tube mill, a pot mill, a roller mill, a turbo mill or a tower mill, under an inert gas to prepare the waste lithium ion battery cell shreds, and waste lithium ion batteries are discharged in water to prepare the discharged waste lithium ion battery cells.

According to one embodiment of the present disclosure, in the step of (a-1) preparing waste lithium ion battery cell shreds, discharged waste lithium ion battery cells or waste lithium ion battery cases, metal powder such as aluminum powder or copper powder may be added to the waste lithium ion battery cell shreds, discharged waste lithium ion battery cells or waste lithium ion battery cases, and the particle size of the metal powder such as aluminum powder or copper powder may be 0.1 to 10 mm.

According to one embodiment of the present disclosure, in the step of (a-2) charging the waste lithium ion battery cell shreds, discharged waste lithium ion battery cells or waste lithium ion battery cases into a melting furnace under air or an inert gas, followed by heating, to prepare a mixture of a lithium alloy compound in which lithium compounds, aluminum and copper are partially melted, a copper metal and an aluminum-copper alloy, the inert gas may be nitrogen, argon or neon, the heating temperature of the melting furnace may be 900 °C to 1250 °C, and the heating time of the melting furnace may be 10 minutes to 6 hours.

According to one embodiment of the present disclosure, in the step of (a-3) separating the graphite from the mixture of the lithium alloy compound, copper metal and aluminum-copper alloy by physical methods such as gravity selection, sieving and air suspension, the size of the sieve net during the sieving process may be 20 um to 210 um.

According to one embodiment of the present disclosure, the method may further comprise, in the step of (a-3), the step of (a-4) shredding and crushing the mixture of the lithium alloy compound, copper metal and aluminum-copper alloy by using a jaw crusher, a cone crusher, a rod mill, a pin mill, a ball mill, a tube mill, a pot mill, a roller mill, a turbo mill or a tower mill, wherein the mixture has a particle size of 20 um to 5 mm.

According to one embodiment of the present disclosure, the lithium compound may be at least one selected from the group consisting of lithium iron phosphate (LiFePO₄), lithium nickel cobalt manganese oxide (Li(Ni,Co,Mn)O₂), lithium manganese oxide (LiMn₂O₄), lithium nickel cobalt aluminum oxide (Li(Ni,Co,Al)O₂) and lithium cobalt oxide (LiCoO₂).

According to one embodiment of the present disclosure, the graphite may be artificial graphite or natural graphite.

According to one embodiment of the present disclosure, the lithium alloy compound may be at least one selected from the group consisting of aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound, and aluminum-copper-lithium-cobalt-oxygen compound.

According to one embodiment of the present disclosure, the mixture of the lithium alloy compound, copper metal and aluminum-copper alloy may have spherical, needle-shaped or rod-shaped porous particles, and the particle size of the mixture of the lithium alloy compound, copper metal and aluminum-copper alloy may be 20 um to 5 mm.

According to one embodiment of the present disclosure, the partial melt separation process may comprise preparing a mixture of a lithium alloy compound in which the lithium compounds, aluminum and copper are partially melted, a copper metal and an aluminum-copper alloy from waste lithium ion battery cell shreds, discharged waste lithium ion battery cells or waste lithium ion battery cases; and separating the graphite from the mixture of the lithium alloy compound, copper metal and aluminum-copper alloy by physical methods such as gravity selection, sieving and air suspension.

According to one embodiment of the present disclosure, the separation rate of lithium may be 95 to 99% by weight.

According to one embodiment of the present disclosure, the separation rate of cobalt may be 95 to 99% by weight.

According to one embodiment of the present disclosure, the separation rate of nickel may be 95 to 99% by weight.

According to one embodiment of the present disclosure, the separation rate of manganese may be 95 to 99% by weight.

According to one embodiment of the present disclosure, the separation rate of iron may be 90 to 96% by weight.

According to one embodiment of the present disclosure, the separation rate of aluminum may be 95 to 99% by weight.

According to one embodiment of the present disclosure, the separation rate of copper may be 75 to 90% by weight.

According to one embodiment of the present disclosure, the separation rate of graphite may be 70 to 95% by weight.

In addition, according to another aspect of the present disclosure, there is provided a method for dry-recycling a waste lithium ion battery, comprising a partial melt separation process for physical separation of graphite from a mixture of a lithium alloy compound, a copper metal and an aluminum-copper alloy, wherein metal powder such as aluminum powder or copper powder may be added to the mixture to partially melt same in the process of preparing the lithium alloy compound.

According to one embodiment of the present disclosure, the method for dry-recycling of the waste lithium ion battery may comprise adding metal powder such as aluminum powder or copper powder to the mixture to partially melt same in the process of preparing the lithium alloy compound.

According to one embodiment of the present disclosure, the particle size of the metal powder such as aluminum powder or copper powder may be 0.1 to 10 mm.

According to one embodiment of the present disclosure, the lithium compound may be at least one selected from the group consisting of lithium iron phosphate (LiFePO₄), lithium nickel cobalt manganese oxide (Li(Ni,Co,Mn)O₂), lithium manganese oxide (LiMn₂O₄), lithium nickel cobalt aluminum oxide (Li(Ni,Co,Al)O₂) and lithium cobalt oxide (LiCoO₂).

According to one embodiment of the present disclosure, the graphite may be artificial graphite or natural graphite.

According to one embodiment of the present disclosure, the lithium alloy compound may be at least one selected from the group consisting of aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound, and aluminum-copper-lithium-cobalt-oxygen compound.

According to one embodiment of the present disclosure, the mixture of the lithium alloy compound, copper metal and aluminum-copper alloy may have spherical, needle-shaped or rod-shaped porous particles, and the particle size of the mixture of the lithium alloy compound, copper metal and aluminum-copper alloy may be 20 um to 5 mm.

According to one embodiment of the present disclosure, the partial melt separation process may comprise charging waste lithium ion battery cell shreds, discharged waste lithium ion battery cells or waste lithium ion battery cases which comprise lithium compounds, aluminum, copper and graphite into a melting furnace to prepare a mixture of a lithium alloy compound in which the lithium compounds, aluminum and copper are partially melted, a copper metal and an aluminum-copper alloy; and separating the graphite from the mixture of the lithium alloy compound, copper metal and aluminum-copper alloy by physical methods such as gravity selection, sieving and air suspension.

According to one embodiment of the present disclosure, the mixture of the lithium alloy compound, copper metal and aluminum-copper alloy may be shredded and crushed by using a jaw crusher, a cone crusher, a rod mill, a pin mill, a ball mill, a tube mill, a pot mill, a roller mill, a turbo mill or a tower mill such that the particle size of the mixture is 20 um to 5 mm.

According to one embodiment of the present disclosure, the separation rate of lithium may be 95 to 99% by weight.

According to one embodiment of the present disclosure, the separation rate of cobalt may be 95 to 99% by weight.

According to one embodiment of the present disclosure, the separation rate of nickel may be 95 to 99% by weight.

According to one embodiment of the present disclosure, the separation rate of manganese may be 95 to 99% by weight.

According to one embodiment of the present disclosure, the separation rate of iron may be 90 to 96% by weight.

According to one embodiment of the present disclosure, the separation rate of aluminum may be 95 to 99% by weight.

According to one embodiment of the present disclosure, the separation rate of copper may be 75 to 90% by weight.

According to one embodiment of the present disclosure, the separation rate of graphite may be 70 to 95% by weight.

In addition, according to another aspect of the present disclosure, there is provided a system for smart recycling a waste lithium ion battery, comprising a crucible into which waste lithium ion battery cell shreds, discharged waste lithium ion battery cells or waste lithium ion battery cases which comprise lithium compounds, aluminum, copper and graphite are charged; a heater in which the crucible is installed; and a heating furnace wherein the heater is charged and the waste lithium ion battery cell shreds, discharged waste lithium ion battery cells or waste lithium ion battery cases which comprise the lithium compounds, aluminum, copper and graphite are heated, wherein the system comprises forming a mixture of a lithium alloy compound in which the lithium compounds, aluminum and copper are partially melted, a copper metal and an aluminum-copper alloy in the heating furnace, and cooling the mixture of the lithium alloy compound, copper metal and aluminum-copper alloy to physically separate the graphite from the mixture of the lithium alloy compound, copper metal and aluminum-copper alloy.

According to one embodiment of the present disclosure, the system for smart recycling of the waste lithium ion battery may comprise adding metal powder such as aluminum powder or copper powder to the mixture to partially melt same in the process of preparing the lithium alloy compound.

According to one embodiment of the present disclosure, the particle size of the metal powder such as aluminum powder or copper powder may be 0.1 to 10 mm.

According to one embodiment of the present disclosure, the lithium compound may be at least one selected from the group consisting of lithium iron phosphate (LiFePO₄), lithium nickel cobalt manganese oxide (Li(Ni,Co,Mn)O₂), lithium manganese oxide (LiMn₂O₄), lithium nickel cobalt aluminum oxide (Li(Ni,Co,Al)O₂) and lithium cobalt oxide (LiCoO₂).

According to one embodiment of the present disclosure, the graphite may be artificial graphite or natural graphite.

According to one embodiment of the present disclosure, the lithium alloy compound may be at least one selected from the group consisting of aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound, and aluminum-copper-lithium-cobalt-oxygen compound.

According to one embodiment of the present disclosure, the mixture of the lithium alloy compound, copper metal and aluminum-copper alloy may have spherical, needle-shaped or rod-shaped porous particles, and the particle size of the mixture of the lithium alloy compound, copper metal and aluminum-copper alloy may be 20 um to 5 mm.

According to one embodiment of the present disclosure, the partial melt separation process may comprise charging waste lithium ion battery cell shreds, discharged waste lithium ion battery cells or waste lithium ion battery cases which comprise lithium compounds, aluminum, copper and graphite into a melting furnace to prepare a mixture of a lithium alloy compound in which the lithium compounds, aluminum and copper are partially melted, a copper metal and an aluminum-copper alloy

According to one embodiment of the present disclosure, the partial melt separation process may comprise, after the partial melting, separating the graphite from the mixture of the lithium alloy compound, copper metal and aluminum-copper alloy by physical methods such as gravity selection, sieving and air suspension.

According to one embodiment of the present disclosure, the physical separation may comprise separating the graphite from the mixture of the lithium alloy compound, copper metal and aluminum-copper alloy by separation processes such as gravity selection, sieving and air suspension.

According to one embodiment of the present disclosure, the mixture of the lithium alloy compound, copper metal and aluminum-copper alloy may be shredded and crushed by using a jaw crusher, a cone crusher, a rod mill, a pin mill, a ball mill, a tube mill, a pot mill, a roller mill, a turbo mill or a tower mill such that the particle size of the mixture is 20 um to 5 mm.

According to one embodiment of the present disclosure, the separation rate of lithium may be 95 to 99% by weight.

According to one embodiment of the present disclosure, the separation rate of cobalt may be 95 to 99% by weight.

According to one embodiment of the present disclosure, the separation rate of nickel may be 95 to 99% by weight.

According to one embodiment of the present disclosure, the separation rate of manganese may be 95 to 99% by weight.

According to one embodiment of the present disclosure, the separation rate of iron may be 90 to 96% by weight.

According to one embodiment of the present disclosure, the separation rate of aluminum may be 95 to 99% by weight.

According to one embodiment of the present disclosure, the separation rate of copper may be 75 to 90% by weight.

According to one embodiment of the present disclosure, the separation rate of graphite may be 70 to 95% by weight.

### Advantageous Effects of Invention

According to the present disclosure, by providing a method for recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure does not require a screening process, does not require slag forming agents and volatilizing agents, has no slag discharge, has no wastewater discharge, and can reduce the emission of carbon dioxide gas, a global warming gas.

In addition, by providing a method for recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure has a short operating time, a low energy consumption rate, a low equipment installation cost, a low maintenance cost and an excellent process stability, and is economical.

In addition, by providing a method for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure does not require a screening process, does not require slag forming agents and volatilizing agents, has no slag discharge, has no wastewater discharge, and can reduce the emission of carbon dioxide gas, a global warming gas.

In addition, by providing a method for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure has a short operating time, a low energy consumption rate, a low equipment installation cost, a low maintenance cost and an excellent process stability, and is economical.

In addition, by providing a method for dry-recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure does not require a screening process, does not require slag forming agents and volatilizing agents, has no slag discharge, has no wastewater discharge, and can reduce the emission of carbon dioxide gas, a global warming gas.

In addition, by providing a method for dry-recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure has a short operating time, a low energy consumption rate, a low equipment installation cost, a low maintenance cost and an excellent process stability, and is economical.

In addition, by providing a system for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure does not require a screening process, does not require slag forming agents and volatilizing agents, has no slag discharge, has no wastewater discharge, and can reduce the emission of carbon dioxide gas, a global warming gas.

In addition, by providing a system for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure has a short operating time, a low energy consumption rate, a low equipment installation cost, a low maintenance cost and an excellent process stability, and is economical.

The effects of the present disclosure are not limited thereto and it should be understood that the effects include all effects that can be inferred from the configuration of the present disclosure described in the following specification or claims.

### Brief Description of Drawings

FIG. 1 is a conceptual diagram of a method for recycling of an LFP-based waste lithium ion battery, comprising a partial melt separation process for lithium alloy compound formation and graphite separation according to an embodiment of the present disclosure.
FIG. 2 is a conceptual diagram of a method for recycling of an LFP-based waste lithium ion battery, comprising a partial melt separation process for lithium alloy compound formation and graphite separation by using aluminum powder or copper powder according to an embodiment of the present disclosure.
FIG. 3 is a conceptual diagram of a method for recycling of an NCM-based waste lithium ion battery, comprising a partial melt separation process for lithium alloy compound formation and graphite separation according to an embodiment of the present disclosure.
FIG. 4 is a conceptual diagram of a method for recycling of an NCM-based waste lithium ion battery, comprising a partial melt separation process for lithium alloy compound formation and graphite separation by using aluminum powder or copper powder according to an embodiment of the present disclosure.
FIG. 5 is a process flow diagram of a method for recycling a waste lithium ion battery, comprising a partial melt separation process for lithium alloy compound formation and graphite separation according to an embodiment of the present disclosure.
FIG. 6 is a process diagram of a method for recycling a waste lithium ion battery, comprising a partial melt separation process for lithium alloy compound formation and graphite separation according to an embodiment of the present disclosure.
FIG. 7 shows photographs of (a) a mixture of a lithium alloy compound, a Cu metal, and an Al-Cu alloy separated by sieving, and (b) graphite separated by sieving, in the method of recycling of an LFP-based waste lithium ion battery, comprising a partial melt separation process for lithium alloy compound formation and graphite separation according to an embodiment of the present disclosure.
FIG. 8 shows photographs of (a) a mixture of a lithium alloy compound, a Cu metal, and an Al-Cu alloy separated by sieving, and (b) graphite separated by sieving, in the method for recycling of an NCM-based waste lithium ion battery, comprising a partial melt separation process for lithium alloy compound formation and graphite separation according to an embodiment of the present disclosure.

### Mode for Invention

Hereinafter, preferred embodiments of the present disclosure will be described with reference to accompanying drawings.

The advantages and features of the present disclosure, and methods of achieving them will be clear by referring to the exemplary embodiments that will be described hereafter in detail with reference to the accompanying drawings.

However, the present disclosure is not limited to the exemplary embodiments described hereafter and may be implemented in various ways, and the exemplary embodiments are provided to complete the description of the present disclosure and let those skilled in the art completely know the scope of the present disclosure and the present disclosure is defined by claims.

Further, when it is determined that well-known technologies, etc. may make the scope of the present disclosure unclear, they will not be described in detail in the following description.

Hereinafter, the present disclosure is described in detail.

### Method for recycling a waste lithium ion battery comprising a partial melt separation process for lithium alloy compound formation and graphite separation-I

The present disclosure provides a method for recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases.

The method for recycling a waste lithium ion battery, comprising the partial melt separation process for lithium alloy compound formation and graphite separation of the present disclosure may comprise preparing a mixture of a lithium alloy compound in which lithium compounds, aluminum and copper are partially melted, a copper metal and an aluminum-copper alloy from waste lithium ion battery cell shreds, discharged waste lithium ion battery cells or waste lithium ion battery cases; and physically separating the graphite from the mixture of the lithium alloy compound, the copper metal and the aluminum-copper alloy.

By providing a method for recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure does not require a screening process, does not require slag forming agents and volatilizing agents, has no slag discharge, has no wastewater discharge, and can reduce the emission of carbon dioxide gas, a global warming gas.

In addition, by providing a method for recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure has a short operating time, a low energy consumption rate, a low equipment installation cost, a low maintenance cost and an excellent process stability, and is economical.

Currently, the methods for recycling a waste lithium ion battery may be broadly divided into a method of drying shredded waste lithium ion battery cells, followed by sorting, to recycle same using a wet method, and a method of recycling shredded waste lithium ion battery cells using a dry method.

Among them, the latest dry method comprises melting and reduction volatilization of shredded waste lithium ion battery cells, separating copper, cobalt, nickel, manganese and the like as an alloy, separating lithium as dust, atomizing the separated alloy to prepare powder; and recovering copper, cobalt, nickel, manganese and the like using a wet method. The method further comprises treating the separated lithium dust by a wet method to recover lithium.

Therefore, the dry method has disadvantages in that the operating temperature for melting and reduction volatilization of complex compounds such as lithium, cobalt, nickel and manganese contained in shredded waste lithium ion battery cells is as high as 1450°C or higher, and a large amount of a slag forming agent such as CaO and SiO₂ is used as an additive to improve the melting point and fluidity of a slag.

In addition, the dry method has a disadvantage in that it burns all the graphite contained in the waste lithium ion battery cells and emits a large amount of carbon dioxide.

In addition, the dry method has a disadvantage in that it requires an atomizing process for manufacturing the separated alloy into powder in order to wet treat same.

In addition, the dry method has a disadvantage in that the slag from which lithium is separated in the melting and reduction volatilization processes has a very low concentration of lithium such that a large amount of residues are discharged and the recovery rate of lithium is low in the wet process for recovering lithium from the slag.

In addition, the dry method has a disadvantage in that a large amount of CaCl₂ or CaF₂ is used to separate lithium as dust in the melting and reduction volatilization processes such that corrosion of the equipment occurs and equipment maintenance costs are high.

Accordingly, the present applicant conducted various studies with great effort over a long period of time and obtained a method for recycling a waste lithium ion battery, a method for smart recycling a waste lithium ion battery, and a system for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, and has completed the present disclosure.

Here, when the mixture of the lithium alloy compound, copper metal and aluminum-copper alloy is prepared by partial melting in a melting furnace, the mixture is prepared as a mixture in the form of spherical, needle-shaped or rod-shaped porous particles with a particle size of 20 um to 5 mm such that the mixture has a different phase from graphite to be distinguished from graphite. Therefore, the graphite may be separated from the mixture of the lithium alloy compound, copper metal and aluminum-copper alloy by physical methods such as sieving and air suspension.

In addition, when sieved, a mixture of a lithium alloy compound, a copper metal, and an aluminum-copper alloy may remain on the mesh, and the material passing through the mesh may be graphite.

In addition, the mixture of the lithium alloy compound, copper metal and aluminum-copper alloy, and the graphite have different phases from each other, i.e., the mixture phase and the graphite phase, such that they are distinguished from each other and may be separated into their respective phases.

Accordingly, a mixture phase separation rate in which the mixture is separated as the mixture phase may be obtained, and a graphite phase separation rate in which the graphite is separated as the graphite phase may be obtained.

Here, the mixture phase separation rate or the graphite phase separation rate may be referred to as the separation rate.

For example, if the mixture is separated from the graphite by 90% by weight, the separation rate may be referred to as 90% by weight, and, if the graphite is separated from the mixture by 95% by weight, the separation rate may be referred to as 95% by weight.

At this time, the lithium alloy compound is not completely melted and is partially melted in a melting furnace to prepare an alloy compound containing small particles of oxygen such that an atomizing process, which is an additional crushing process for a later wet process, may not be required.

Here, if the atomizing process is performed, porous particles may not be formed.

In addition, the mixture of the lithium alloy compound, copper metal and aluminum-copper alloy may be later treated in a wet process to recover lithium, nickel, cobalt, manganese, aluminum, iron or copper.

In addition, the graphite may be later treated in a wet process to recover high-quality graphite.

In addition, the present disclosure may relate to a method of recycling a waste lithium ion battery, comprising partially melting lithium compounds (e.g., LiFePO₄, Li (Ni,Co,Mn)O₂, Li(Ni,Co,Al)O₂, LiMn₂O₄ and LiCoO₂), aluminum and copper contained in waste lithium ion battery cells to prepare a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) which is an alloy compound of lithium compounds (e.g., LiFePO₄, Li (Ni,Co,Mn) O₂, Li(Ni,Co,Al)O₂, LiMn₂O₄ and LiCoO₂), aluminum or copper; and separating graphite from the mixture.

In addition, lithium (Li), cobalt (Co), nickel (Ni), copper (Cu), manganese (Mn), aluminum (Al) and the like can be easily recovered from the copper metal, aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) separated using the present disclosure, by utilizing an existing wet process.

In addition, the separated graphite can be easily manufactured into high-purity graphite by using an existing wet process.

In addition, the positive electrode (+ pole) contained in the waste lithium ion battery cell is a thin aluminum plate tens of microns thick coated with lithium compounds (e.g., LiFePO₄, Li(Ni,Co,Mn)O₂, Li(Ni,Co,Al)O₂, LiMn2O4 and LiCoO₂). In addition, the negative electrode (- pole) is a thin copper plate tens of microns thick coated with graphite.

Among these, the melting temperature of an aluminum metal is 660°C, and the melting temperature of copper metal is 1085°C. On the other hand, the melting temperature of the lithium compounds (e.g., LiFePO₄, Li(Ni,Co,Mn)O₂, Li(Ni,Co,Al)O₂, LiMn2O4 and LiCoO₂), and graphite is over 1400°C.

In addition, the melting temperature of an aluminum-copper alloy may vary depending on the composition of aluminum and copper, and ranges from 548 to 1085 °C.

Therefore, for example, when the waste lithium ion battery cells that have been shredded and dried melt at an appropriate temperature, aluminum as a positive (+) electrode plate and copper as a negative (-) electrode plate melt, and an aluminum-copper alloy with a low melting temperature is formed, causing the particles to become larger.

In addition, as the aluminum plate as the positive (+) plate melts, a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound), which is an alloy compound of lithium compounds (e.g., LiFePO₄, Li (Ni,Co,Mn)O₂, Li(Ni,Co,Al)O₂, LiMn₂O₄ and LiCoO₂), aluminum and copper coated on an aluminum plate, is formed, causing the particles to become larger.

On the other hand, as the copper plate as the negative electrode (-) melts, the graphite coated on the copper plate is separated from the copper plate and powdered.

Therefore, the waste lithium ion battery may be recycled by melting waste lithium ion battery cells dried after shredded at an appropriate temperature, and easily separating graphite from the mixture of the copper metal, aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) through sieving or air suspension.

Therefore, the present disclosure may relate to a method for recycling a waste lithium ion battery, comprising partially melting the shredded waste lithium ion battery cells at a temperature ranging from 900 to 1250 °C, in consideration of the characteristics of the substances contained in the waste lithium ion battery cells, melting the lithium compounds (e.g., LiFePO₄, Li(Ni,Co,Mn)O₂, Li(Ni,Co,Al)O₂, LiMn₂O₄ and LiCoO₂), copper and aluminum contained in the waste lithium ion battery cells to prepare a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound); and separating graphite from the mixture.

Here, the method for recycling a waste lithium ion battery, comprising a partial melt separation process for lithium alloy compound formation and graphite separation may comprise adding metal powder such as aluminum powder or copper powder to the mixture to partially melt same in the process of preparing the lithium alloy compound.

At this time, the particle size of the metal powder such as aluminum powder or copper powder may be 0.1 to 10 mm.

If the particle size of the aluminum powder is less than 0.1 mm, there are disadvantages in that the effect of forming a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) is insignificant, loss occurs due to oxidation of the aluminum powder, and the price is high.

In addition, when the particle size of the aluminum powder exceeds 10 mm, a problem may arise in that it is difficult to form a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound).

At this time, the particle size of the metal powder such as aluminum powder or copper powder may be preferably 0.1 to 5 mm, and more preferably 0.5 to 1 mm.

In addition, the lithium compound may be at least one selected from the group consisting of lithium iron phosphate (LiFePO₄), lithium nickel cobalt manganese oxide (Li(Ni,Co,Mn)O₂), lithium manganese oxide (LiMn₂O₄), lithium nickel cobalt aluminum oxide (Li(Ni,Co,Al)O₂) and lithium cobalt oxide (LiCoO₂).

In addition, the graphite may be artificial graphite or natural graphite.

In addition, the lithium alloy compound may be at least one selected from the group consisting of aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound, and aluminum-copper-lithium-cobalt-oxygen compound.

At this time, the mixture of the lithium alloy compound, copper metal and aluminum-copper alloy may have spherical, needle-shaped or rod-shaped porous particles, and the particle size of the mixture of the lithium alloy compound, copper metal and aluminum-copper alloy may be 20 um to 5 mm.

Here, the particles of the mixture of the lithium alloy compound, copper metal and aluminum-copper alloy are porous particles and have a small particle size such that a crushing process for the subsequent wet process may not be performed.

In addition, the partial melt separation process may comprise charging waste lithium ion battery cell shreds, discharged waste lithium ion battery cells or waste lithium ion battery cases which comprise lithium compounds, aluminum, copper and graphite into a melting furnace to prepare a mixture of a lithium alloy compound in which the lithium compounds, aluminum and copper are partially melted, a copper metal and an aluminum-copper alloy; and separating the graphite from the mixture of the lithium alloy compound, copper metal and aluminum-copper alloy by physical methods such as gravity selection, sieving and air suspension.

Here, the specific gravity selection may be a separation method using the principle that, when particles with different specific gravity receive an external force (e.g., gravity and centrifugal force) in a fluid, they make different falling movements due to the difference in specific gravity.

At this time, the fluid may comprise water.

In addition, the air suspension may be a separation method by specific gravity using an air nozzle.

In addition, the size of the sieve net during the sieving process may be 20 um to 210 µm.

Here, when the size of the sieve net is less than 20 um, a problem may arise in that the separated mixture of the copper metal and aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel- oxygen compound, aluminum-copper-manganese-oxygen compound and aluminum-copper-lithium-cobalt-oxygen compound) contains a large amount of graphite, thereby reducing the separation efficiency.

In addition, when the size of the sieve net is less than 20 um, a problem may occur in that the separation rate of the prepared mixture of the copper metal and aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel- oxygen compound, aluminum-copper-manganese-oxygen compound and aluminum-copper-lithium-cobalt-oxygen compound) is reduced.

At this time, the size of the sieve net during the sieving process may preferably be 30 um to 210 µm, and more preferably 50 um to 210 µm.

In the method for recycling a waste lithium ion battery comprising a lithium metal compound, a metal compound and graphite, the separation rate of lithium may be 95 to 99% by weight.

In the method for recycling a waste lithium ion battery comprising lithium compounds, aluminum, copper and graphite, the separation rate of cobalt may be 95 to 99% by weight.

In the method for recycling a waste lithium ion battery comprising lithium compounds, aluminum, copper and graphite, the separation rate of nickel may be 95 to 99% by weight.

In the method for recycling a waste lithium ion battery comprising lithium compounds, aluminum, copper and graphite, the separation rate of manganese may be 95 to 99% by weight.

In the method for recycling a waste lithium ion battery comprising lithium compounds, aluminum, copper and graphite, the separation rate of iron may be 90 to 96% by weight.

In the method for recycling a waste lithium ion battery comprising lithium compounds, aluminum, copper and graphite, the separation rate of aluminum may be 95 to 99% by weight.

In the method for recycling a waste lithium ion battery comprising lithium compounds, aluminum, copper and graphite, the separation rate of copper may be 75 to 90% by weight.

In the method for recycling a waste lithium ion battery comprising lithium compounds, aluminum, copper and graphite, the separation rate of graphite may be 70 to 95% by weight.

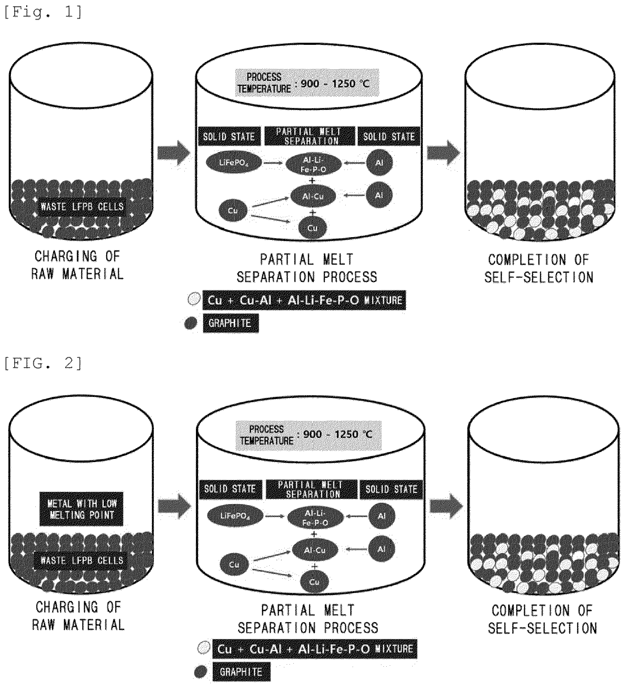

FIG. 1 is a conceptual diagram of a method for recycling of an LFP-based waste lithium ion battery, comprising a partial melt separation process for lithium alloy compound formation and graphite separation according to an embodiment of the present disclosure.

Referring to FIG. 1, first, a waste lithium ion battery is shredded/crushed to prepare shreds as a raw material.

Thereafter, the raw material is charged into a melting furnace under air or an inert gas and heated to be partially melted to prepare a mixture of a lithium alloy compound (Al-Li-Fe-P-O) in which lithium compounds, aluminum and copper are partially melted, a copper metal and an aluminum.

Then, graphite is separated from the mixture of the lithium alloy compound (Al-Li-Fe-P-O), copper metal and aluminum-copper alloy by physical methods such as sieving and air suspension.

Here, the mixture of the lithium alloy compound (Al-Li-Fe-P-O), copper metal and aluminum-copper alloy is indicated in white, and the graphite is indicated in black.

At this time, the mixture of the lithium alloy compound (Al-Li-Fe-P-O), copper metal and aluminum-copper alloy, and the graphite are self-selected.

FIG. 2 is a conceptual diagram of a method for recycling of an LFP-based waste lithium ion battery, comprising a partial melt separation process for lithium alloy compound formation and graphite separation by using aluminum powder or copper powder according to an embodiment of the present disclosure.

Referring to FIG. 2, first, a waste lithium ion battery is shredded/crushed to prepare shreds, and aluminum powder or copper powder, which are metals with a low melting point, is added to prepare the mixture as a raw material.

Thereafter, the raw material is charged into a melting furnace under air or an inert gas and heated to be partially melted to prepare a mixture of a lithium alloy compound (Al-Li-Fe-P-O) in which lithium compounds, aluminum and copper are partially melted, a copper metal and an aluminum.

Then, graphite is separated from the mixture of the lithium alloy compound (Al-Li-Fe-P-O), copper metal and aluminum-copper alloy by physical methods such as sieving and air suspension.

Here, the mixture of the lithium alloy compound (Al-Li-Fe-P-O), copper metal and aluminum-copper alloy is indicated in white, and the graphite is indicated in black.

At this time, the mixture of the lithium alloy compound (Al-Li-Fe-P-O), copper metal and aluminum-copper alloy, and the graphite are self-selected.

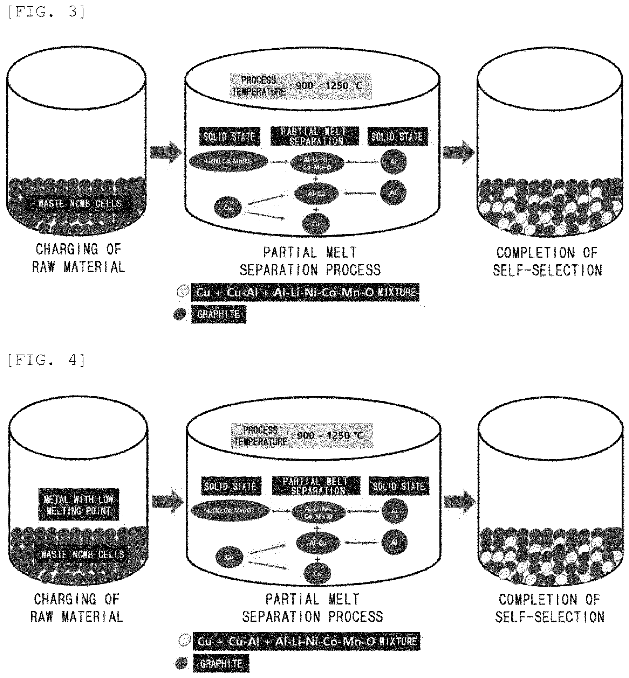

FIG. 3 is a conceptual diagram of a method for recycling of an NCM-based waste lithium ion battery, comprising a partial melt separation process for lithium alloy compound formation and graphite separation according to an embodiment of the present disclosure.

Referring to FIG. 3, first, a waste lithium ion battery is shredded/crushed to prepare the shreds as a raw material.

Thereafter, the raw material is charged into a melting furnace under air or an inert gas and heated to be partially melted to prepare a mixture of a lithium alloy compound (Al-Li-Ni-Co-Mn-O) in which lithium compounds, aluminum and copper are partially melted, a copper metal and an aluminum.

Then, graphite is separated from the mixture of the lithium alloy compound (Al-Li-Ni-Co-Mn-O), copper metal and aluminum-copper alloy by physical methods such as sieving and air suspension.

Here, the mixture of the lithium alloy compound (Al-Li-Ni-Co-Mn-O), copper metal and aluminum-copper alloy is indicated in white, and the graphite is indicated in black.

At this time, the mixture of the lithium alloy compound (Al-Li-Ni-Co-Mn-O), copper metal and aluminum-copper alloy, and the graphite are self-selected.

FIG. 4 is a conceptual diagram of a method for recycling of an NCM-based waste lithium ion battery, comprising a partial melt separation process for lithium alloy compound formation and graphite separation by using aluminum powder or copper powder according to an embodiment of the present disclosure.

Referring to FIG. 4, first, a waste lithium ion battery is shredded/crushed to prepare shreds, and aluminum powder or copper powder, which are metals with a low melting point, is added to prepare the mixture as a raw material.

Thereafter, the raw material is charged into a melting furnace under air or an inert gas and heated to be partially melted to prepare a mixture of a lithium alloy compound (Al-Li-Ni-Co-Mn-O) in which lithium compounds, aluminum and copper are partially melted, a copper metal and an aluminum.

Then, graphite is separated from the mixture of the lithium alloy compound (Al-Li-Ni-Co-Mn-O), copper metal and aluminum-copper alloy by physical methods such as sieving and air suspension.

Here, the mixture of the lithium alloy compound (Al-Li-Ni-Co-Mn-O), copper metal and aluminum-copper alloy is indicated in white, and the graphite is indicated in black.

At this time, the mixture of the lithium alloy compound (Al-Li-Ni-Co-Mn-O), copper metal and aluminum-copper alloy, and the graphite are self-selected.

### Method for recycling a waste lithium ion battery comprising a partial melt separation process for lithium alloy compound formation and graphite separation-II

The present disclosure provides a method for recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases.

The method for recycling of the waste lithium ion battery, comprising the partial melt separation process for lithium alloy compound formation and graphite separation, wherein the waste lithium ion battery comprises lithium compounds, aluminum, copper and graphite of the present disclosure may comprise: (a-1) preparing waste lithium ion battery cell shreds, discharged waste lithium ion battery cells or waste lithium ion battery cases; (a-2) charging the waste lithium ion battery cell shreds, discharged waste lithium ion battery cells or waste lithium ion battery cases into a melting furnace under air or an inert gas, followed by heating, to prepare a mixture of a lithium alloy compound in which lithium compounds, aluminum and copper are partially melted, a copper metal and an aluminum-copper alloy; and (a-3) separating the graphite from the mixture of the lithium alloy compound, copper metal and aluminum-copper alloy by physical methods such as gravity selection, sieving and air suspension.

By providing a method for recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure does not require a screening process, does not require slag forming agents and volatilizing agents, has no slag discharge, has no wastewater discharge, and can reduce the emission of carbon dioxide gas, a global warming gas.

In addition, by providing a method for recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure has a short operating time, a low energy consumption rate, a low equipment installation cost, a low maintenance cost and an excellent process stability, and is economical.

Here, when the mixture of the lithium alloy compound, copper metal and aluminum-copper alloy is prepared by partial melting in a melting furnace, the mixture is prepared as a mixture in the form of spherical, needle-shaped or rod-shaped porous particles with a particle size of 20 um to 5 mm such that the mixture has a different phase from graphite and is distinguished from graphite. Therefore, the graphite may be separated from the mixture of the lithium alloy compound, copper metal and aluminum-copper alloy by physical methods such as sieving and air suspension.

In addition, when sieved, a mixture of a lithium alloy compound, a copper metal, and an aluminum-copper alloy may remain on the mesh, and the material passing through the mesh may be graphite.

In addition, the mixture of the lithium alloy compound, copper metal and aluminum-copper alloy, and the graphite have different phases from each other, i.e., the mixture phase and the graphite phase, such that they are distinguished from each other and may be separated into their respective phases.

Accordingly, a mixture phase separation rate in which the mixture is separated as the mixture phase may be obtained, and a graphite phase separation rate in which the graphite is separated as the graphite phase may be obtained.

Here, the mixture phase separation rate or the graphite phase separation rate may be referred to as the separation rate.

For example, if the mixture is separated from the graphite by 90% by weight, the separation rate may be referred to as 90% by weight, and, if the graphite is separated from the mixture by 95% by weight, the separation rate may be referred to as 95% by weight.

At this time, the lithium alloy compound is not completely melted and is partially melted in a melting furnace to prepare an alloy compound containing small particles of oxygen such that an atomizing process, which is an additional crushing process for a later wet process, may not be required.

Here, if the atomizing process is performed, porous particles may not be formed.

In addition, the mixture of the lithium alloy compound, copper metal and aluminum-copper alloy may be later treated in a wet process to recover lithium, nickel, cobalt, manganese, aluminum, iron or copper.

In addition, the graphite may be later treated in a wet process to recover high-quality graphite.

At this time, in the step of (a-1) preparing waste lithium ion battery cell shreds, discharged waste lithium ion battery cells or waste lithium ion battery cases, waste lithium ion battery cells may be shredded by a jaw crusher, a cone crusher, a rod mill, a pin mill, a ball mill, a tube mill, a pot mill, a roller mill, a turbo mill or a tower mill, under an inert gas to prepare the waste lithium ion battery cell shreds, and waste lithium ion batteries may be discharged in water to prepare the discharged waste lithium ion battery cells.

According to one embodiment of the present disclosure, the step of (a-1) preparing waste lithium ion battery cell shreds, discharged waste lithium ion battery cells or waste lithium ion battery cases, metal powder such as aluminum powder or copper powder may be added to the waste lithium ion battery cell shreds, discharged waste lithium ion battery cells or waste lithium ion battery cases, and the particle size of the metal powder such as aluminum powder or copper powder may be 0.1 to 10 mm.

If the particle size of the aluminum powder is less than 0.1 mm, there are disadvantages in that the effect of forming a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) is insignificant, loss occurs due to oxidation of the aluminum powder, and the price is high.

In addition, when the particle size of the aluminum powder exceeds 10 mm, a problem may arise in that it is difficult to form a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound).

At this time, the particle size of the metal powder such as aluminum powder or copper powder may be preferably 0.1 to 5 mm, and more preferably 0.5 to 1 mm.

In addition, in the step of (a-2) charging the waste lithium ion battery cell shreds, discharged waste lithium ion battery cells or waste lithium ion battery cases into a melting furnace under air or an inert gas, followed by heating, to prepare a mixture of a lithium alloy compound in which lithium compounds, aluminum and copper are partially melted, a copper metal and an aluminum-copper alloy, the inert gas maybe nitrogen, argon or neon, the heating temperature of the melting furnace may be 900 °C to 1250 °C, and the heating time of the melting furnace may be 10 minutes to 6 hours.

Here, the atmosphere inside the melting furnace may be an atmosphere or an inert gas atmosphere.

At this time, the atmospheric atmosphere has the disadvantage of increasing the oxidation rate of aluminum and copper and the loss rate of graphite and has the advantage of reducing gas costs.

In addition, the inert gas atmosphere has the disadvantage of increasing gas costs and has the advantage of low oxidation rates of aluminum and copper.

In addition, when the heating temperature of the melting furnace is lower than 900°C, the reaction between the lithium compounds (e.g., LiFePO₄, Li(Ni,Co,Mn)O₂, Li (Ni,Co,Al)O₂, LiMn₂O₄ and LiCoO₂) and aluminum or copper does not occur easily, making it difficult to form a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound or aluminum-copper-lithium-cobalt-oxygen compound), and copper does not melt such that an aluminum-copper alloy is not formed.

In addition, if the heating temperature of the melting furnace exceeds 1250 °C, problems may occur in that the effect of forming a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) is insignificant, and energy consumption increases.

At this time, the heat-treatment temperature may be preferably 500 to 980°C, and more preferably 500 to 950°C.

In addition, if the heating time of the melting furnace is less than 10 minutes, a problem may arise that the effectiveness of forming the mixture of the copper metal, aluminum-copper alloy, and lithium alloy compound (aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound or aluminum-copper-lithium-cobalt-oxygen compound) is reduced.

In addition, , if the heating time of the melting furnace exceeds 6 hours, problems may occur in that the effect of forming a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) is insignificant, and energy consumption increases.

In addition, the lithium metal compound (e.g., LiFePO₄, Li(Ni,Co,Mn)O₂, Li(Ni,Co,Al)O₂, LiMn₂O₄ and LiCoO₂) contained in spent lithium ion battery cells, aluminum and copper may be partially melted in nitrogen, argon or neon atmosphere, the cooling may be carried out inside the furnace to 500°C to 900°C, and then carried out outside the furnace.

If the cooling temperature in the furnace is less than 500°C, problems may arise in that the effect of reducing the graphite loss rate may be insignificant and the operating time may be prolonged. In addition, if the cooling temperature in the furnace exceeds 900°C, problems may arise in that the effect of reducing the operating time may be insignificant and the loss rate of graphite may increase.

Here, the furnace cooling process may alleviate the phenomenon of graphite flying, thereby lowering the loss rate of graphite.

At this time, the cooling temperature in the furnace may be preferably 500°C to 800°C, and more preferably 600°C to 700°C.

In addition, the cooling process may be omitted by partially melting the lithium metal compound (e.g., LiFePO₄, Li(Ni,Co,Mn)O₂, Li(Ni,Co,Al)O₂, LiMn₂O₄ and LiCoO₂), aluminum and copper contained in the waste lithium ion battery cells in an atmospheric atmosphere.

In addition, in the step of (a-3) separating the graphite from the mixture of the lithium alloy compound, copper metal, and aluminum-copper alloy by physical methods such as gravity selection, sieving and air suspension, the size of the sieve net during the sieving process may be 20 um to 210 um.

Here, the specific gravity selection may be a separation method using the principle that when particles with different specific gravity receive an external force (e.g., gravity and centrifugal force) in a fluid, they make different falling movements due to the difference in specific gravity.

At this time, the fluid may comprise water.

In addition, the air suspension may be a separation method by specific gravity using an air nozzle.

Here, when the size of the sieve net is less than 20 um, a problem may arise in that the separated mixture of the copper metal and aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel- oxygen compound, aluminum-copper-manganese-oxygen compound and aluminum-copper-lithium-cobalt-oxygen compound) contains a large amount of graphite, thereby reducing the separation efficiency.

In addition, when the size of the sieve net is less than 20 um, a problem may occur in that the separation rate of the prepared mixture of the copper metal and aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel- oxygen compound, aluminum-copper-manganese-oxygen compound and aluminum-copper-lithium-cobalt-oxygen compound) is reduced.

At this time, the size of the sieve net during the sieving process may preferably be 30 um to 210 µm, and more preferably 50 um to 210 µm.

In addition, the lithium compound may be at least one selected from the group consisting of lithium iron phosphate (LiFePO₄), lithium nickel cobalt manganese oxide (Li(Ni,Co,Mn)O₂), lithium manganese oxide (LiMn₂O₄), lithium nickel cobalt aluminum oxide (Li(Ni,Co,Al)O₂) and lithium cobalt oxide (LiCoO₂).

In addition, the graphite may be artificial graphite or natural graphite.

In addition, the lithium alloy compound may be at least one selected from the group consisting of aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound, and aluminum-copper-lithium-cobalt-oxygen compound.

At this time, the mixture of the lithium alloy compound, copper metal and aluminum-copper alloy may have spherical, needle-shaped or rod-shaped porous particles, and the particle size of the mixture of the lithium alloy compound, copper metal and aluminum-copper alloy may be 20 um to 5 mm.

Here, the particles of the mixture of the lithium alloy compound, copper metal and aluminum-copper alloy are porous particles and have a small particle size such that a crushing process for the subsequent wet process may not be performed.

In addition, the partial melt separation process may comprise charging waste lithium ion battery cell shreds, discharged waste lithium ion battery cells or waste lithium ion battery cases which comprise lithium compounds, aluminum, copper and graphite into a melting furnace to prepare a mixture of a lithium alloy compound in which the lithium compounds, aluminum and copper are partially melted, a copper metal and an aluminum-copper alloy from waste lithium ion battery cell shreds, discharged waste lithium ion battery cells or waste lithium ion battery cases; and separating the graphite from the mixture of the lithium alloy compound, copper metal and aluminum-copper alloy by physical methods such as gravity selection, sieving and air suspension.

In addition, in the method for recycling a waste lithium ion battery comprising a lithium metal compound, a metal compound and graphite, the separation rate of lithium may be 95 to 99% by weight.

In addition, in the method for recycling a waste lithium ion battery comprising lithium compounds, aluminum, copper and graphite, the separation rate of cobalt may be 95 to 99% by weight.

In addition, in the method for recycling a waste lithium ion battery comprising lithium compounds, aluminum, copper and graphite, the separation rate of nickel may be 95 to 99% by weight.

In addition, in the method for recycling a waste lithium ion battery comprising lithium compounds, aluminum, copper and graphite, the separation rate of manganese may be 95 to 99% by weight.

In addition, in the method for recycling a waste lithium ion battery comprising lithium compounds, aluminum, copper and graphite, the separation rate of iron may be 90 to 96% by weight.

In addition, in the method for recycling a waste lithium ion battery comprising lithium compounds, aluminum, copper and graphite, the separation rate of aluminum may be 95 to 99% by weight.

In addition, in the method for recycling a waste lithium ion battery comprising lithium compounds, aluminum, copper and graphite, the separation rate of copper may be 75 to 90% by weight.

In addition, in the method for recycling a waste lithium ion battery comprising lithium compounds, aluminum, copper and graphite, the separation rate of graphite may be 70 to 95% by weight.

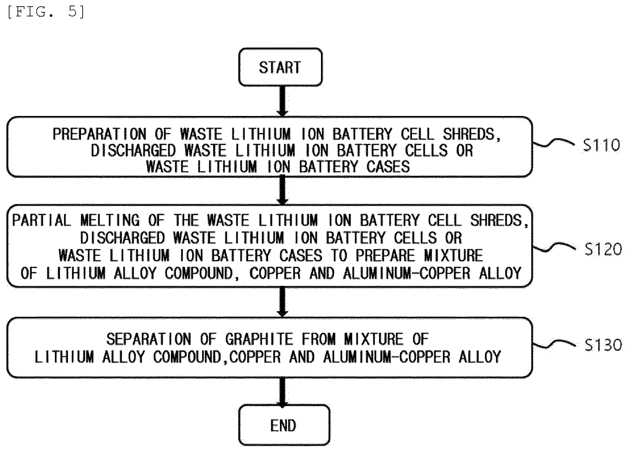

FIG. 5 is a process flow diagram of a method for recycling a waste lithium ion battery, comprising a partial melt separation process for lithium alloy compound formation and graphite separation according to an embodiment of the present disclosure.

Referring to FIG. 5, waste lithium ion battery cell shreds, discharged waste lithium ion battery cells or waste lithium ion battery cases are prepared. S110

Thereafter, the waste lithium ion battery cell shreds, discharged waste lithium ion battery cells or waste lithium ion battery cases are charged into a melting furnace under air or an inert gas and heated to be partially melted to prepare a mixture of a lithium alloy compound in which lithium compounds, aluminum and copper are partially melted, a copper metal and an aluminum-copper alloy. S120

Then, graphite is separated from the mixture of the lithium alloy compound, copper metal and aluminum-copper alloy by physical methods such as sieving and air suspension. S130

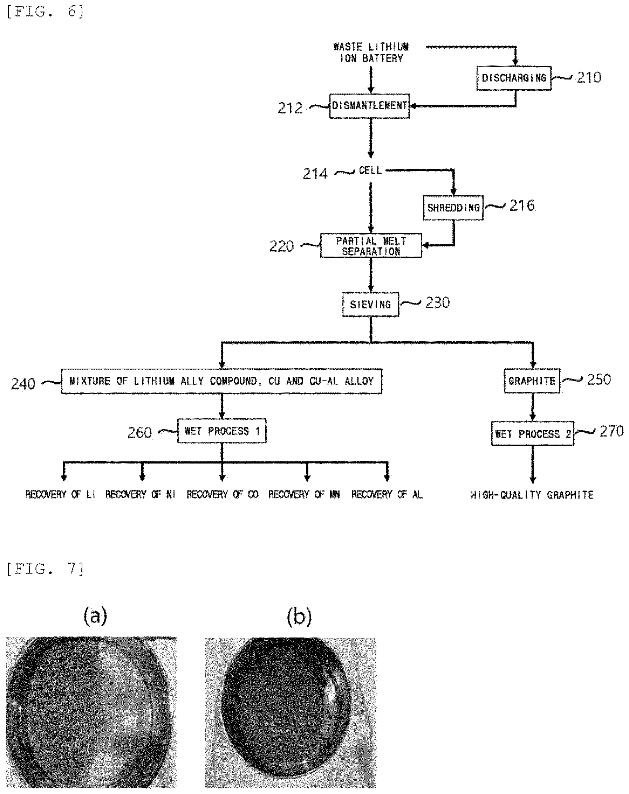

FIG. 6 is a process diagram of a method for recycling a waste lithium ion battery, comprising a partial melt separation process for lithium alloy compound formation and graphite separation according to an embodiment of the present disclosure.

Referring to FIG. 6, a waste lithium ion battery is subjected to discharging 210 and physical dismantlement 212 or subjected to physically dismantlement 212 without discharging 210 to prepare a cell 214.

Thereafter, when the undischarged cell 214 is subjected to shredding 216 under nitrogen and partially melted in a melting furnace to prepare a mixture of a lithium alloy compound, a copper metal and an aluminum-copper alloy, the mixture is manufactured to be spherical, needle-shaped or rod-shaped porous particles with a particle size of 20 um to 5 mm such that the mixture has a different phase from graphite and is distinguished from graphite.

Alternatively, if the discharged cell 214 is not subjected to shredding 216 but partially melted in a melting furnace to prepare a mixture of a lithium alloy compound, a copper metal and an aluminum-copper alloy, the mixture is manufactured to be spherical, needle-shaped or rod-shaped porous particles with a particle size of 20 um to 5 mm such that the mixture has a different phase from graphite and is distinguished from graphite.

Then, sieving 230 is carried out to separate graphite 250 from the mixture of the lithium alloy compound, copper metal and aluminum-copper alloy 240.

Thereafter, the mixture of the lithium alloy compound, copper metal and aluminum-copper alloy 240 is treated in Wet Process 1 260 to recover lithium, nickel, cobalt, manganese or aluminum.

Then, the graphite 250 is treated in Wet Process 2 270 to recover high-quality graphite.

### Method for smart recycling a waste lithium ion battery-I

The present disclosure provides a method for smart recycling a waste lithium ion battery comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases.

The method for smart recycling of the waste lithium ion battery may comprise preparing a mixture of a lithium alloy compound in which lithium compounds, aluminum and copper are partially melted, a copper metal and an aluminum-copper alloy from waste lithium ion battery cell shreds, discharged waste lithium ion battery cells or waste lithium ion battery cases; and physically separating the graphite from the mixture of the lithium alloy compound, the copper metal and the aluminum-copper alloy, and the particle size of the mixture of the lithium alloy compound, copper metal, and aluminum-copper alloy may be 20 um to 5 mm.

By providing a method for smart recycling a waste lithium ion battery comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure does not require a screening process, does not require slag forming agents and volatilizing agents, has no slag discharge, has no wastewater discharge, and can reduce the emission of carbon dioxide gas, a global warming gas.

In addition, by providing a method for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure has a short operating time, a low energy consumption rate, a low equipment installation cost, a low maintenance cost and an excellent process stability, and is economical.

Here, a lithium alloy compound, a copper metal and an aluminum-copper alloy and graphite may be dry-separated from waste lithium ion battery cell shreds, discharged waste lithium ion battery cells or waste lithium ion battery cases, as the partial melt separation process for lithium alloy compound formation and graphite separation.

At this time, the waste lithium ion battery cell shreds and discharged waste lithium ion battery cells may comprise lithium compounds, aluminum, copper and graphite, and the waste lithium ion battery cases may comprise aluminum, copper, nickel or iron.

In addition, when the mixture of the lithium alloy compound, copper metal and aluminum-copper alloy is prepared by partial melting in a melting furnace, the mixture is prepared as a mixture in the form of spherical, needle-shaped or rod-shaped porous particles with a particle size of 20 um to 5 mm such that the mixture has a different phase from graphite and is distinguished from graphite. Therefore, the graphite may be separated from the mixture of the lithium alloy compound, copper metal and aluminum-copper alloy by physical methods such as sieving and air suspension.

In addition, when sieved, a mixture of a lithium alloy compound, a copper metal, and an aluminum-copper alloy may remain on the mesh, and the material passing through the mesh may be graphite.

In addition, the mixture of the lithium alloy compound, copper metal and aluminum-copper alloy, and the graphite have different phases from each other, i.e., the mixture phase and the graphite phase, such that they are distinguished from each other and may be separated into their respective phases.

Accordingly, a mixture phase separation rate in which the mixture is separated as the mixture phase may be obtained, and a graphite phase separation rate in which the graphite is separated as the graphite phase may be obtained.

Here, the mixture phase separation rate or the graphite phase separation rate may be referred to as the separation rate.

For example, if the mixture is separated from the graphite by 90% by weight, the separation rate may be referred to as 90% by weight, and, if the graphite is separated from the mixture by 95% by weight, the separation rate may be referred to as 95% by weight.

At this time, the lithium alloy compound is not completely melted and is partially melted in a melting furnace to prepare an alloy compound containing small particles of oxygen such that an atomizing process, which is an additional crushing process for a later wet process, may not be required.

Here, if the atomizing process is performed, porous particles may not be formed.

In addition, the mixture of the lithium alloy compound, copper metal and aluminum-copper alloy may be later treated in a wet process to recover lithium, nickel, cobalt, manganese, aluminum, iron or copper.

In addition, the graphite may be later treated in a wet process to recover high-quality graphite.

In addition, the particle size of the lithium alloy compound may be 20 um to 5 mm.

Here, when the particle size of the lithium alloy compound is within the above-described range, recycling efficiency of the waste lithium ion battery may be increased.

At this time, the particle size of the lithium alloy compound may preferably be 20 um to 4.98 mm, more preferably 20 um to 4.95 mm.

Here, the method for smart recycling a waste lithium ion battery may comprise adding metal powder such as aluminum powder or copper powder to partially melt same in the process of preparing the lithium alloy compound.

At this time, the particle size of the aluminum or copper powder may be 0.1 to 10 mm.

If the particle size of the aluminum powder is less than 0.1 mm, there are disadvantages in that the effect of forming a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) is insignificant, loss occurs due to oxidation of the aluminum powder, and the price is high.

In addition, when the particle size of the aluminum or copper powder exceeds 10 mm, a problem may arise in that it is difficult to form a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound).

At this time, the particle size of the aluminumor copper powder may be preferably 0.1 to 5 mm, and more preferably 0.5 to 1 mm.

In addition, the lithium compound may be at least one selected from the group consisting of lithium iron phosphate (LiFePO₄), lithium nickel cobalt manganese oxide (Li(Ni,Co,Mn)O₂), lithium manganese oxide (LiMn₂O₄), lithium nickel cobalt aluminum oxide (Li(Ni,Co,Al)O₂) and lithium cobalt oxide (LiCoO₂).

In addition, the graphite may be artificial graphite or natural graphite.

In addition, the lithium alloy compound may be at least one selected from the group consisting of aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound, and aluminum-copper-lithium-cobalt-oxygen compound.

At this time, the mixture of the lithium alloy compound, copper metal and aluminum-copper alloy may have spherical, needle-shaped or rod-shaped porous particles, and the particle size of the mixture of the lithium alloy compound, copper metal and aluminum-copper alloy may be 20 um to 5 mm.

Here, the particles of the mixture of the lithium alloy compound, copper metal and aluminum-copper alloy are porous particles and have a small particle size such that a crushing process for the subsequent wet process may not be performed.

In addition, the partial melt separation process may comprise charging waste lithium ion battery cell shreds, discharged waste lithium ion battery cells or waste lithium ion battery cases which comprise lithium compounds, aluminum, copper and graphite into a melting furnace to prepare a mixture of a lithium alloy compound in which the lithium compounds, aluminum and copper are partially melted, a copper metal and an aluminum-copper alloy; and separating the graphite from the mixture of the lithium alloy compound, copper metal and aluminum-copper alloy by physical methods such as gravity selection, sieving and air suspension.

Here, the specific gravity selection may be a separation method using the principle that when particles with different specific gravity receive an external force (e.g., gravity and centrifugal force) in a fluid, they make different falling movements due to the difference in specific gravity.

At this time, the fluid may comprise water.

In addition, the air suspension may be a separation method by specific gravity using an air nozzle.

In addition, the size of the sieve net during the sieving process may be 20 um to 210 µm.

Here, when the size of the sieve net is less than 20 um, a problem may arise in that the separated mixture of the copper metal and aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel- oxygen compound, aluminum-copper-manganese-oxygen compound and aluminum-copper-lithium-cobalt-oxygen compound) contains a large amount of graphite, thereby reducing the separation efficiency.

In addition, when the size of the sieve net is less than 20 um, a problem may occur in that the separation rate of the prepared mixture of the copper metal and aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel- oxygen compound, aluminum-copper-manganese-oxygen compound and aluminum-copper-lithium-cobalt-oxygen compound) is reduced.

At this time, the size of the sieve net during the sieving process may preferably be 30 um to 210 µm, and more preferably 50 um to 210 µm.

In the method for recycling a waste lithium ion battery comprising a lithium metal compound, a metal compound and graphite, the separation rate of lithium may be 95 to 99% by weight.

In the method for recycling a waste lithium ion battery comprising lithium compounds, aluminum, copper and graphite, the separation rate of cobalt may be 95 to 99% by weight.

In the method for recycling a waste lithium ion battery comprising lithium compounds, aluminum, copper and graphite, the separation rate of nickel may be 95 to 99% by weight.

In the method for recycling a waste lithium ion battery comprising lithium compounds, aluminum, copper and graphite, the separation rate of manganese may be 95 to 99% by weight.

In the method for recycling a waste lithium ion battery comprising lithium compounds, aluminum, copper and graphite, the separation rate of iron may be 90 to 96% by weight.

In the method for recycling a waste lithium ion battery comprising lithium compounds, aluminum, copper and graphite, the separation rate of aluminum may be 95 to 99% by weight.

In the method for recycling a waste lithium ion battery comprising lithium compounds, aluminum, copper and graphite, the separation rate of copper may be 75 to 90% by weight.

In the method for recycling a waste lithium ion battery comprising lithium compounds, aluminum, copper and graphite, the separation rate of graphite may be 70 to 95% by weight.

### Method for smart recycling a waste lithium ion battery-II

The present disclosure provides a method for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases.

The method for smart recycling of the waste lithium ion battery wherein the waste lithium ion battery comprises lithium compounds, aluminum, copper and graphite of the present disclosure may comprise: (b-1) preparing waste lithium ion battery cell shreds, discharged waste lithium ion battery cells or waste lithium ion battery cases; (b-2) charging the waste lithium ion battery cell shreds, discharged waste lithium ion battery cells or waste lithium ion battery cases into a melting furnace under air or an inert gas, followed by heating, to prepare a mixture of a lithium alloy compound in which lithium compounds, aluminum and copper are partially melted, a copper metal and an aluminum-copper alloy; and (b-3) separating the graphite from the mixture of the lithium alloy compound, copper metal and aluminum-copper alloy by physical methods such as gravity selection, sieving and air suspension.

By providing a method for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure does not require a screening process, does not require slag forming agents and volatilizing agents, has no slag discharge, has no wastewater discharge, and can reduce the emission of carbon dioxide gas, a global warming gas.

In addition, by providing a method for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure has a short operating time, a low energy consumption rate, a low equipment installation cost, a low maintenance cost and an excellent process stability, and is economical.

Here, the partial melt separation process for lithium alloy compound formation and graphite separation may comprise dry-separating a lithium alloy compound, a copper metal and an aluminum-copper alloy and graphite from waste lithium ion battery cell shreds, discharged waste lithium ion battery cells or waste lithium ion battery cases.

At this time, the waste lithium ion battery cell shreds and discharged waste lithium ion battery cells may comprise lithium compounds, aluminum, copper and graphite, and the waste lithium ion battery cases may comprise aluminum, copper, nickel or iron.

In addition, when the mixture of the lithium alloy compound, copper metal and aluminum-copper alloy is prepared by partial melting in a melting furnace, the mixture is prepared as a mixture in the form of spherical, needle-shaped or rod-shaped porous particles with a particle size of 20 um to 5 mm such that the mixture has a different phase from graphite and is distinguished from graphite. Therefore, the graphite may be separated from the mixture of the lithium alloy compound, copper metal and aluminum-copper alloy by physical methods such as sieving and air suspension.

In addition, when sieved, a mixture of a lithium alloy compound, a copper metal, and an aluminum-copper alloy may remain on the mesh, and the material passing through the mesh may be graphite.

In addition, the mixture of the lithium alloy compound, copper metal and aluminum-copper alloy, and the graphite have different phases, such as the mixture phase and the graphite phase such that they are distinguished from each other and may be separated into their respective phases.

Accordingly, a mixture phase separation rate in which the mixture is separated as the mixture phase may be obtained, and a graphite phase separation rate in which the graphite is separated as the graphite phase may be obtained.

Here, the mixture phase separation rate or the graphite phase separation rate may be referred to as the separation rate.

For example, if the mixture is separated from the graphite by 90% by weight, the separation rate may be referred to as 90% by weight, and, if the graphite is separated from the mixture by 95% by weight, the separation rate may be referred to as 95% by weight.

At this time, the lithium alloy compound is not completely melted and is partially melted in a melting furnace to prepare an alloy compound containing small particles of oxygen such that an atomizing process, which is an additional crushing process for a later wet process, may not be required.

Here, if the atomizing process is performed, porous particles may not be formed.

In addition, the mixture of the lithium alloy compound, copper metal and aluminum-copper alloy may be later treated in a wet process to recover lithium, nickel, cobalt, manganese, aluminum, iron or copper.

In addition, the graphite may be later treated in a wet process to recover high-quality graphite.

At this time, in the step of (a-1) shredding waste lithium ion battery cells by a jaw crusher, a cone crusher, a rod mill, a pin mill, a ball mill, a tube mill, a pot mill, a roller mill, a turbo mill or a tower mill, under an inert gas to prepare waste lithium ion battery cell shreds, and discharging a waste lithium ion battery in water to prepare the discharged waste lithium ion battery cells.

In addition, in the step of (b-1) preparing waste lithium ion battery cell shreds, discharged waste lithium ion battery cells or waste lithium ion battery cases, metal powder such as aluminum powder or copper powder may be added to the waste lithium ion battery cell shreds, discharged waste lithium ion battery cells or waste lithium ion battery cases, and the particle size of the metal powder such as aluminum powder or copper powder may be 0.1 to 10 mm.

If the particle size of the metal powder such as aluminum powder or copper powder is less than 0.1 mm, there are disadvantages in that the effect of forming a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) is insignificant, loss occurs due to oxidation of the aluminum powder, and the price is high.

In addition, when the particle size of the metal powder such as aluminum powder or copper powder exceeds 10 mm, a problem may arise in that it is difficult to form a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound).

At this time, the particle size of the metal powder such as aluminum powder or copper powder may be preferably 0.1 to 5 mm, and more preferably 0.5 to 1 mm.

In addition, the particle size of the lithium alloy compound may be 20 um to 5 mm.

Here, when the particle size of the lithium alloy compound is within the above-described range, recycling efficiency of the waste lithium ion battery may be increased.

At this time, the particle size of the lithium alloy compound may preferably be 20 um to 4.98 mm, more preferably 20 um to 4.95 mm.

In addition, in the step of (b-2) charging the waste lithium ion battery cell shreds, discharged waste lithium ion battery cells or waste lithium ion battery cases into a melting furnace under air or an inert gas and heating same to prepare a mixture of a lithium alloy compound in which lithium compounds, aluminum and copper are partially melted, a copper metal and an aluminum-copper alloy, the inert gas may be nitrogen, argon or neon, the heating temperature of the melting furnace may be 900 °C to 1250 °C, and the heating time of the melting furnace may be 10 minutes to 6 hours.

Here, the atmosphere inside the melting furnace may be an atmosphere or an inert gas atmosphere.

At this time, the atmospheric atmosphere has the disadvantage of increasing the oxidation rate of aluminum and copper and the loss rate of graphite and has the advantage of reducing gas costs.

In addition, the inert gas atmosphere has the disadvantage of increasing gas costs and has the advantage of low oxidation rates of aluminum and copper.

In addition, when the heating temperature of the melting furnace is lower than 900°C, the reaction between the lithium compounds (e.g., LiFePO₄, Li(Ni,Co,Mn)O₂, Li (Ni,Co,Al)O₂, LiMn₂O₄ and LiCoO₂) and aluminum or copper does not occur easily, making it difficult to form a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound or aluminum-copper-lithium-cobalt-oxygen compound), and copper does not melt such that an aluminum-copper alloy is not formed.

In addition, if the heating temperature of the melting furnace exceeds 1250 °C, problems may occur in that the effect of forming a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) is insignificant, and energy consumption increases.

At this time, the heat-treatment temperature may be preferably 500 to 980°C, and more preferably 500 to 950°C.

In addition, if the heating time of the melting furnace is less than 10 minutes, a problem may arise that the effectiveness of forming the mixture of the copper metal, aluminum-copper alloy and lithium alloy compound (aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound or aluminum-copper-lithium-cobalt-oxygen compound) is reduced.

In addition, , if the heating time of the melting furnace exceeds 6 hours, problems may occur in that the effect of forming a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) is insignificant, and energy consumption increases.

In addition, the lithium metal compound (e.g., LiFePO₄, Li (Ni,Co,Mn) O₂, Li(Ni,Co,Al)O₂, LiMn₂O₄ and LiCoO₂) contained in spent lithium ion battery cells, aluminum and copper may be partially melted in nitrogen, argon or neon atmosphere, the cooling may be carried out inside the furnace to 500°C to 900°C, and then carried out outside the furnace.

If the cooling temperature in the furnace is less than 500°C, problems may arise in that the effect of reducing the graphite loss rate may be insignificant and the operating time may be prolonged. In addition, if the cooling temperature in the furnace exceeds 900°C, problems may arise in that the effect of reducing the operating time may be insignificant and the loss rate of graphite may increase.

Here, the furnace cooling process may alleviate the phenomenon of graphite flying, thereby lowering the loss rate of graphite.

At this time, the cooling temperature in the furnace may be preferably 500°C to 800°C, and more preferably 600°C to 700°C.

In addition, the cooling process may be omitted by partially melting the lithium metal compound (e.g., LiFePO₄, Li(Ni,Co,Mn)O₂, Li(Ni,Co,Al)O₂, LiMn₂O₄ and LiCoO₂) , aluminum and copper contained in the waste lithium ion battery cells in an atmospheric atmosphere.

In addition, in the step of (b-3) separating the graphite from the mixture of the lithium alloy compound, copper metal and aluminum-copper alloy by physical methods such as gravity selection, sieving and air suspension, the size of the sieve net during the sieving process may be 20 um to 210 µm.

Here, the specific gravity selection may be a separation method using the principle that when particles with different specific gravity receive an external force (e.g., gravity and centrifugal force) in a fluid, they make different falling movements due to the difference in specific gravity.

At this time, the fluid may comprise water.

In addition, the air suspension may be a separation method by specific gravity using an air nozzle.

At this time, the size of the sieve net during the sieving process may be 20 um to 210 um.

In addition, when the size of the sieve net is less than 20 um, a problem may arise in that the separated mixture of the copper metal and aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel- oxygen compound, aluminum-copper-manganese-oxygen compound and aluminum-copper-lithium-cobalt-oxygen compound) contains a large amount of graphite, thereby reducing the separation efficiency.

In addition, when the size of the sieve net is less than 20 um, a problem may occur in that the separation rate of the prepared mixture of the copper metal and aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel- oxygen compound, aluminum-copper-manganese-oxygen compound and aluminum-copper-lithium-cobalt-oxygen compound) is reduced.

At this time, the size of the sieve net during the sieving process may preferably be 30 um to 210 µm, and more preferably 50 um to 210 µm.

In addition, the method may further comprise, after the step of (b-3), the step of (b-4) shredding and crushing the mixture of the lithium alloy compound, copper metal and aluminum-copper alloy, wherein the mixture has a particle size of 20 um to 5 mm.

Here, when the particle size of the mixture of the lithium alloy compound, copper metal and aluminum-copper alloy is within the above-described range, the extraction efficiency of valuable metals in the subsequent wet process may be superior.

At this time, the particle size of the mixture of the lithium alloy compound, copper metal and aluminum-copper alloy may preferably be 20 um to 4.98 mm, more preferably 20 um to 4.95 mm.

In addition, the lithium compound may be at least one selected from the group consisting of lithium iron phosphate (LiFePO₄), lithium nickel cobalt manganese oxide (Li(Ni,Co,Mn)O₂), lithium manganese oxide (LiMn₂O₄), lithium nickel cobalt aluminum oxide (Li(Ni,Co,Al)O₂) and lithium cobalt oxide (LiCoO₂).

In addition, the graphite may be artificial graphite or natural graphite.

In addition, the lithium alloy compound may be at least one selected from the group consisting of aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound, and aluminum-copper-lithium-cobalt-oxygen compound.

At this time, the mixture of the lithium alloy compound, copper metal and aluminum-copper alloy may have spherical, needle-shaped or rod-shaped porous particles, and the particle size of the mixture of the lithium alloy compound, copper metal and aluminum-copper alloy may be 20 um to 5 mm.

Here, the particles of the mixture of the lithium alloy compound, copper metal and aluminum-copper alloy are porous particles and have a small particle size such that a crushing process for the subsequent wet process may not be performed.

In addition, the partial melt separation process may comprise charging waste lithium ion battery cell shreds, discharged waste lithium ion battery cells or waste lithium ion battery cases which comprise lithium compounds, aluminum, copper and graphite into a melting furnace to prepare a mixture of a lithium alloy compound in which the lithium compounds, aluminum and copper are partially melted, a copper metal and an aluminum-copper alloy; and separating the graphite from the mixture of the lithium alloy compound, copper metal and aluminum-copper alloy by physical methods such as gravity selection, sieving and air suspension.

In addition, in the method for recycling a waste lithium ion battery comprising a lithium metal compound, a metal compound and graphite, the separation rate of lithium may be 95 to 99% by weight.

In addition, in the method for recycling a waste lithium ion battery comprising lithium compounds, aluminum, copper and graphite, the separation rate of cobalt may be 95 to 99% by weight.

In addition, in the method for recycling a waste lithium ion battery comprising lithium compounds, aluminum, copper and graphite, the separation rate of nickel may be 95 to 99% by weight.

In addition, in the method for recycling a waste lithium ion battery comprising lithium compounds, aluminum, copper and graphite, the separation rate of manganese may be 95 to 99% by weight.

In addition, in the method for recycling a waste lithium ion battery comprising lithium compounds, aluminum, copper and graphite, the separation rate of iron may be 90 to 96% by weight.

In addition, in the method for recycling a waste lithium ion battery comprising lithium compounds, aluminum, copper and graphite, the separation rate of aluminum may be 95 to 99% by weight.

In addition, in the method for recycling a waste lithium ion battery comprising lithium compounds, aluminum, copper and graphite, the separation rate of copper may be 75 to 90% by weight.

In addition, in the method for recycling a waste lithium ion battery comprising lithium compounds, aluminum, copper and graphite, the separation rate of graphite may be 70 to 95% by weight.

### Method for dry-recycling a waste lithium ion battery

The present disclosure provides a method for dry-recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases.

The method for dry-recycling of the waste lithium ion battery of the present disclosure may comprise a partial melt separation process for physical separation of graphite and the mixture of the lithium alloy compound, copper metal and aluminum-copper alloy, wherein metal powder such as aluminum powder or copper powder may be added to partially met the mixture in the process of preparing the lithium alloy compound.

By providing a method for dry-recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure does not require a screening process, does not require slag forming agents and volatilizing agents, has no slag discharge, has no wastewater discharge, and can reduce the emission of carbon dioxide gas, a global warming gas.

By providing a method for dry-recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure has a short operating time, a low energy consumption rate, a low equipment installation cost, a low maintenance cost and an excellent process stability, and is economical.

Here, the partial melt separation process for lithium alloy compound formation and graphite separation may comprise dry-separating a lithium alloy compound, a copper metal and an aluminum-copper alloy and graphite from waste lithium ion battery cell shreds, discharged waste lithium ion battery cells or waste lithium ion battery cases.

At this time, the waste lithium ion battery cell shreds and discharged waste lithium ion battery cells may comprise lithium compounds, aluminum, copper and graphite, and the waste lithium ion battery cases may comprise aluminum, copper, nickel or iron.

In addition, when the mixture of the lithium alloy compound, copper metal and aluminum-copper alloy is prepared by partial melting in a melting furnace, the mixture is prepared as a mixture in the form of spherical, needle-shaped or rod-shaped porous particles with a particle size of 20 um to 5 mm such that the mixture has a different phase from graphite and is distinguished from graphite. Therefore, the graphite may be separated from the mixture of the lithium alloy compound, copper metal and aluminum-copper alloy by physical methods such as sieving and air suspension.

In addition, when sieved, a mixture of a lithium alloy compound, a copper metal, and an aluminum-copper alloy may remain on the mesh, and the material passing through the mesh may be graphite.

In addition, the mixture of the lithium alloy compound, copper metal and aluminum-copper alloy, and the graphite have different phases, such as the mixture phase and the graphite phase such that they are distinguished from each other and may be separated into their respective phases.

Accordingly, a mixture phase separation rate in which the mixture is separated as the mixture phase may be obtained, and a graphite phase separation rate in which the graphite is separated as the graphite phase may be obtained.

Here, the mixture phase separation rate or the graphite phase separation rate may be referred to as the separation rate.

For example, if the mixture is separated from the graphite by 90% by weight, the separation rate may be referred to as 90% by weight, and, if the graphite is separated from the mixture by 95% by weight, the separation rate may be referred to as 95% by weight.

At this time, the lithium alloy compound is not completely melted and is partially melted in a melting furnace to prepare an alloy compound containing small particles of oxygen such that an atomizing process, which is an additional crushing process for a later wet process, may not be required.

Here, if the atomizing process is performed, porous particles may not be formed.

In addition, the mixture of the lithium alloy compound, copper metal and aluminum-copper alloy may be later treated in a wet process to recover lithium, nickel, cobalt, manganese, aluminum, iron or copper.

In addition, the graphite may be later treated in a wet process to recover high-quality graphite.

In addition, the particle size of the lithium alloy compound may be 20 um to 5 mm.

Here, when the particle size of the lithium alloy compound is within the above-described range, recycling efficiency of the waste lithium ion battery may be increased.

At this time, the particle size of the lithium alloy compound may preferably be 20 um to 4.98 mm, more preferably 20 um to 4.95 mm.

The present disclosure may relate to a method for recycling a waste lithium ion battery comprising partially melting the lithium compounds (e.g., LiFePO₄, Li(Ni,Co,Mn)O₂, Li(Ni,Co,Al)O₂, LiMn₂O₄ and LiCoO₂), aluminum and copper contained in waste lithium ion battery cells to prepare a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) which is an alloy compound of lithium compounds (e.g., LiFePO₄, Li (Ni,Co,Mn) O₂, Li(Ni,Co,Al)O₂, LiMn₂O₄ and LiCoO₂), aluminum or copper; and separating graphite from the mixture.

In addition, lithium (Li), cobalt (Co), nickel (Ni), copper (Cu), manganese (Mn), aluminum (Al) and the like can be easily recovered from the copper metal, aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) separated using the present disclosure, by utilizing an existing wet process.

In addition, the separated graphite can be easily manufactured into high-purity graphite by using an existing wet process.

In addition, the waste lithium ion battery may be recycled by melting waste lithium ion battery cells dried after shredded at an appropriate temperature, and easily separating graphite from the mixture of the copper metal, aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) through sieving or air suspension.

Therefore, the present disclosure may relate to a method for recycling a waste lithium ion battery comprising partially melting the shredded waste lithium ion battery cells at a temperature ranging from 900 to 1250 °C, in consideration of the characteristics of the materials contained in the waste lithium ion battery cells, melting the lithium compounds (e.g., LiFePO₄, Li(Ni,Co,Mn)O₂, Li(Ni,Co,Al)O₂, LiMn₂O₄ and LiCoO₂), copper and aluminum contained in the waste lithium ion battery cells to prepare a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound); and separating graphite from the mixture.

Here, the particle size of the metal powder such as aluminum powder or copper powder may be 0.1 to 10 mm.

If the particle size of the aluminum powder is less than 0.1 mm, there are disadvantages in that the effect of forming a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) is insignificant, loss occurs due to oxidation of the aluminum powder, and the price is high.

In addition, when the particle size of the aluminum powder exceeds 10 mm, a problem may arise in that it is difficult to form a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound).

At this time, the particle size of the metal powder such as aluminum powder or copper powder may be preferably 0.1 to 5 mm, and more preferably 0.5 to 1 mm.

In addition, the lithium compound may be at least one selected from the group consisting of lithium iron phosphate (LiFePO₄), lithium nickel cobalt manganese oxide (Li(Ni,Co,Mn)O₂), lithium manganese oxide (LiMn₂O₄), lithium nickel cobalt aluminum oxide (Li(Ni,Co,Al)O₂) and lithium cobalt oxide (LiCoO₂).

In addition, the graphite may be artificial graphite or natural graphite.

In addition, the lithium alloy compound may be at least one selected from the group consisting of aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound, and aluminum-copper-lithium-cobalt-oxygen compound.

At this time, the mixture of the lithium alloy compound, copper metal and aluminum-copper alloy may have spherical, needle-shaped or rod-shaped porous particles, and the particle size of the mixture of the lithium alloy compound, copper metal and aluminum-copper alloy may be 20 um to 5 mm.

Here, the particles of the mixture of the lithium alloy compound, copper metal and aluminum-copper alloy are porous particles and have a small particle size such that a crushing process for the subsequent wet process may not be performed.

In addition, the partial melt separation process may comprise charging waste lithium ion battery cell shreds, discharged waste lithium ion battery cells or waste lithium ion battery cases which comprise lithium compounds, aluminum, copper and graphite into a melting furnace to prepare a mixture of a lithium alloy compound in which the lithium compounds, aluminum and copper are partially melted, a copper metal and an aluminum-copper alloy; and separating the graphite from the mixture of the lithium alloy compound, copper metal and aluminum-copper alloy by physical methods such as gravity selection, sieving and air suspension.

Here, the specific gravity selection may be a separation method using the principle that when particles with different specific gravity receive an external force (e.g., gravity and centrifugal force) in a fluid, they make different falling movements due to the difference in specific gravity.

At this time, the fluid may comprise water.

In addition, the air suspension may be a separation method by specific gravity using an air nozzle.

In addition, the size of the sieve net during the sieving process may be 20 um to 210 µm.

Here, when the size of the sieve net is less than 20 um, a problem may arise in that the separated mixture of the copper metal and aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel- oxygen compound, aluminum-copper-manganese-oxygen compound and aluminum-copper-lithium-cobalt-oxygen compound) contains a large amount of graphite, thereby reducing the separation efficiency.

In addition, when the size of the sieve net is less than 20 um, a problem may occur in that the separation rate of the prepared mixture of the copper metal and aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel- oxygen compound, aluminum-copper-manganese-oxygen compound and aluminum-copper-lithium-cobalt-oxygen compound) is reduced.

At this time, the size of the sieve net during the sieving process may preferably be 30 um to 210 µm, and more preferably 50 um to 210 um.

In addition, the mixture of the lithium alloy compound, copper metal or aluminum-copper alloy may be shredded by using a jaw crusher, a cone crusher, a rod mill, a pin mill, a ball mill, a tube mill, a pot mill, a roller mill, a turbo mill or a tower mill such that the particle size of the mixture is 20 um to 5 mm.

Here, when the particle size of the lithium alloy compound is within the above-described range, recycling efficiency of the waste lithium ion battery may be increased.

At this time, the particle size of the lithium alloy compound may preferably be 20 um to 4.98 mm, more preferably 20 um to 4.95 mm.

In addition, in the method for recycling a waste lithium ion battery comprising a lithium metal compound, a metal compound and graphite, the separation rate of lithium may be 95 to 99% by weight.

In addition, in the method for recycling a waste lithium ion battery comprising lithium compounds, aluminum, copper and graphite, the separation rate of cobalt may be 95 to 99% by weight.

In addition, in the method for recycling a waste lithium ion battery comprising lithium compounds, aluminum, copper and graphite, the separation rate of nickel may be 95 to 99% by weight.

In addition, in the method for recycling a waste lithium ion battery comprising lithium compounds, aluminum, copper and graphite, the separation rate of manganese may be 95 to 99% by weight.

In addition, in the method for recycling a waste lithium ion battery comprising lithium compounds, aluminum, copper and graphite, the separation rate of iron may be 90 to 96% by weight.

In addition, in the method for recycling a waste lithium ion battery comprising lithium compounds, aluminum, copper and graphite, the separation rate of aluminum may be 95 to 99% by weight.

In addition, in the method for recycling a waste lithium ion battery comprising lithium compounds, aluminum, copper and graphite, the separation rate of copper may be 75 to 90% by weight.

In addition, in the method for recycling a waste lithium ion battery comprising lithium compounds, aluminum, copper and graphite, the separation rate of graphite may be 70 to 95% by weight.

### System for smart recycling a waste lithium ion battery

The present disclosure provides a system for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases.

The system for smart recycling a waste lithium ion battery of the present disclosure may comprise a crucible filled with shredded waste lithium ion battery cells, discharged waste lithium ion battery cells or waste lithium ion battery cases which comprise lithium compounds, aluminum, copper and graphite; a heater in which the crucible is installed; and a heating furnace into which the heater is charged, and in which the waste lithium ion battery cell shreds, discharged waste lithium ion battery cells or waste lithium ion battery cases which comprise the lithium compounds, aluminum, copper and graphite are heated, wherein the system comprises forming a mixture of a lithium alloy compound in which the lithium compounds, aluminum and copper are partially melted, a copper metal, and an aluminum-copper alloy in the heating furnace, and cooling the mixture of the lithium alloy compound, copper metal, and aluminum-copper alloy; and physically separate the graphite from the mixture of the lithium alloy compound, copper metal and aluminum-copper alloy.

In addition, by providing a system for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, the present disclosure does not require a screening process, does not require slag forming agents and volatilizing agents, has no slag discharge, has no wastewater discharge, and can reduce the emission of carbon dioxide gas, a global warming gas.

In addition, by providing a system for smart recycling a waste lithium ion battery, comprising a partial melt separation process for lithium alloy compound formation and graphite separation, wherein the partial melt separation process comprises dry-separating a lithium alloy compound, a copper metal, an aluminum-copper alloy, and graphite from waste lithium ion battery cell shreds, discharged waste lithium ion battery cells or waste lithium ion battery cases, this system has a short operating time, a low energy consumption rate, a low equipment installation cost, a low maintenance cost and an excellent process stability, and is economical.

Here, the partial melt separation process for lithium alloy compound formation and graphite separation may comprise dry-separating a lithium alloy compound, a copper metal and an aluminum-copper alloy and graphite from waste lithium ion battery cell shreds, discharged waste lithium ion battery cells or waste lithium ion battery cases.

At this time, the waste lithium ion battery cell shreds and discharged waste lithium ion battery cells may comprise lithium compounds, aluminum, copper and graphite, and the waste lithium ion battery cases may comprise aluminum, copper, nickel or iron.

In addition, when the mixture of the lithium alloy compound, copper metal and aluminum-copper alloy is prepared by partial melting in a melting furnace, the mixture is prepared as a mixture in the form of spherical, needle-shaped or rod-shaped porous particles with a particle size of 20 um to 5 mm such that the mixture has a different phase from graphite and is distinguished from graphite. Therefore, the graphite may be separated from the mixture of the lithium alloy compound, copper metal and aluminum-copper alloy by physical methods such as sieving and air suspension.

In addition, when sieved, a mixture of a lithium alloy compound, a copper metal, and an aluminum-copper alloy may remain on the mesh, and the material passing through the mesh may be graphite.

In addition, the mixture of the lithium alloy compound, copper metal and aluminum-copper alloy, and the graphite have different phases, such as the mixture phase and the graphite phase such that they are distinguished from each other and may be separated into their respective phases.

Accordingly, a mixture phase separation rate in which the mixture is separated as the mixture phase may be obtained, and a graphite phase separation rate in which the graphite is separated as the graphite phase may be obtained.

Here, the mixture phase separation rate or the graphite phase separation rate may be referred to as the separation rate.

For example, if the mixture is separated from the graphite by 90% by weight, the separation rate may be referred to as 90% by weight, and, if the graphite is separated from the mixture by 95% by weight, the separation rate may be referred to as 95% by weight.

At this time, the lithium alloy compound is not completely melted and is partially melted in a melting furnace to prepare an alloy compound containing small particles of oxygen such that an atomizing process, which is an additional crushing process for a later wet process, may not be required.

Here, if the atomizing process is performed, porous particles may not be formed.

In addition, the mixture of the lithium alloy compound, copper metal and aluminum-copper alloy may be later treated in a wet process to recover lithium, nickel, cobalt, manganese, aluminum, iron or copper.

In addition, the graphite may be later treated in a wet process to recover high-quality graphite.

In addition, the particle size of the lithium alloy compound may be 20 um to 5 mm.

Here, when the particle size of the lithium alloy compound is within the above-described range, recycling efficiency of the waste lithium ion battery may be increased.

At this time, the particle size of the lithium alloy compound may preferably be 20 um to 4.98 mm, more preferably 20 um to 4.95 mm.

The present disclosure may relate to a method for recycling a waste lithium ion battery comprising partially melting the lithium compounds (e.g., LiFePO₄, Li(Ni,Co,Mn)O₂, Li(Ni,Co,Al)O₂, LiMn₂O₄ and LiCoO₂), aluminum and copper contained in waste lithium ion battery cells to prepare a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) which is an alloy compound of lithium compounds (e.g., LiFePO₄, Li(Ni,Co,Mn)O₂, Li(Ni,Co,Al)O₂, LiMn₂O₄ and LiCoO₂), aluminum or copper; and separating graphite from the mixture.

In addition, lithium (Li), cobalt (Co), nickel (Ni), copper (Cu), manganese (Mn), aluminum (Al) and the like can be easily recovered from the copper metal, aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) separated using the present disclosure, by utilizing an existing wet process.

In addition, the separated graphite can be easily manufactured into high-purity graphite by using an existing wet process.

In addition, the waste lithium ion battery may be recycled by melting waste lithium ion battery cells dried after shredded at an appropriate temperature, and easily separating graphite from the mixture of the copper metal, aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) through sieving or air suspension.

Therefore, the present disclosure may relate to a method for recycling a waste lithium ion battery comprising partially melting the shredded waste lithium ion battery cells at a temperature ranging from 900 to 1250 °C, in consideration of the characteristics of the materials contained in the waste lithium ion battery cells, melting the lithium compounds (e.g., LiFePO₄, Li(Ni,Co,Mn)O₂, Li(Ni,Co,Al)O₂, LiMn₂O₄ and LiCoO₂), copper and aluminum contained in the waste lithium ion battery cells to prepare a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound); and separating graphite from the mixture.

Here, the system for smart recycling of the waste lithium ion battery may comprise adding metal powder such as aluminum powder or copper powder to the mixture to partially melt same in the process of preparing the lithium alloy compound.

At this time, the particle size of the metal powder such as aluminum powder or copper powder may be 0.1 to 10 mm.

If the particle size of the aluminum powder is less than 0.1 mm, there are disadvantages in that the effect of forming a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound) is insignificant, loss occurs due to oxidation of the aluminum powder, and the price is high.

In addition, when the particle size of the aluminum powder exceeds 10 mm, a problem may arise in that it is difficult to form a mixture of a copper metal, an aluminum-copper alloy and a lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound and aluminum-copper-lithium-cobalt-oxygen compound).

At this time, the particle size of the metal powder such as aluminum powder or copper powder may be preferably 0.1 to 5 mm, and more preferably 0.5 to 1 mm.

In addition, the lithium compound may be at least one selected from the group consisting of lithium iron phosphate (LiFePO₄), lithium nickel cobalt manganese oxide (Li(Ni,Co,Mn)O₂), lithium manganese oxide (LiMn₂O₄), lithium nickel cobalt aluminum oxide (Li(Ni,Co,Al)O₂) and lithium cobalt oxide (LiCoO₂).

In addition, the graphite may be artificial graphite or natural graphite.

In addition, the lithium alloy compound may be at least one selected from the group consisting of aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound, and aluminum-copper-lithium-cobalt-oxygen compound.

At this time, the mixture of the lithium alloy compound, copper metal and aluminum-copper alloy may have spherical, needle-shaped or rod-shaped porous particles, and the particle size of the mixture of the lithium alloy compound, copper metal and aluminum-copper alloy may be 20 um to 5 mm.

Here, the particles of the mixture of the lithium alloy compound, copper metal and aluminum-copper alloy are porous particles and have a small particle size such that a crushing process for the subsequent wet process may not be performed.

In addition, the partial melt separation process may comprise charging waste lithium ion battery cell shreds, discharged waste lithium ion battery cells or waste lithium ion battery cases which comprise lithium compounds, aluminum, copper and graphite into a melting furnace to prepare a mixture of a lithium alloy compound in which the lithium compounds, aluminum and copper are partially melted, a copper metal and an aluminum-copper alloy; and separating the graphite from the mixture of the lithium alloy compound, copper metal and aluminum-copper alloy by physical methods such as gravity selection, sieving and air suspension.

In addition, the physical separation may be a process of separating the graphite from the mixture of the lithium alloy compound, copper metal and aluminum-copper alloy by gravity selection, sieving or air suspension.

Here, the specific gravity selection may be a separation method using the principle that when particles with different specific gravity receive an external force (e.g., gravity and centrifugal force) in a fluid, they make different falling movements due to the difference in specific gravity.

At this time, the fluid may comprise water.

In addition, the air suspension may be a separation method by specific gravity using an air nozzle.

In addition, the size of the sieve net during the sieving process may be 20 um to 210 µm.

Here, when the size of the sieve net is less than 20 um, a problem may arise in that the separated mixture of the copper metal and aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel- oxygen compound, aluminum-copper-manganese-oxygen compound and aluminum-copper-lithium-cobalt-oxygen compound) contains a large amount of graphite, thereby reducing the separation efficiency.

In addition, when the size of the sieve net is less than 20 um, a problem may arise in that the separation rate of the prepared mixture of the copper metal and aluminum-copper alloy and lithium alloy compound (e.g., aluminum-copper-lithium-iron-phosphorus-oxygen compound, aluminum-copper-lithium-cobalt-nickel-manganese-oxygen compound, aluminum-copper-lithium-cobalt-nickel- oxygen compound, aluminum-copper-manganese-oxygen compound and aluminum-copper-lithium-cobalt-oxygen compound) is reduced.

At this time, the size of the sieve net during the sieving process may preferably be 30 µm to 210 µm, and more preferably 50 µm to 210 µm.

In addition, the mixture of the lithium alloy compound, copper metal or aluminum-copper alloy may be shredded by using a jaw crusher, a cone crusher, a rod mill, a pin mill, a ball mill, a tube mill, a pot mill, a roller mill, a turbo mill or a tower mill such that the particle size is 20 um to 5 mm.

Here, when the particle size of the lithium alloy compound is within the above-described range, recycling efficiency of the waste lithium ion battery may be increased.

At this time, the particle size of the lithium alloy compound may preferably be 20 µm to 4.98 mm, more preferably 20 µm to 4.95 mm.

In addition, in the method for recycling a waste lithium ion battery comprising a lithium metal compound, a metal compound and graphite, the separation rate of lithium may be 95 to 99% by weight.

In addition, in the method for recycling a waste lithium ion battery comprising lithium compounds, aluminum, copper and graphite, the separation rate of cobalt may be 95 to 99% by weight.

In addition, in the method for recycling a waste lithium ion battery comprising lithium compounds, aluminum, copper and graphite, the separation rate of nickel may be 95 to 99% by weight.

In addition, in the method for recycling a waste lithium ion battery comprising lithium compounds, aluminum, copper and graphite, the separation rate of manganese may be 95 to 99% by weight.

In addition, in the method for recycling a waste lithium ion battery comprising lithium compounds, aluminum, copper and graphite, the separation rate of iron may be 90 to 96% by weight.

In addition, in the method for recycling a waste lithium ion battery comprising lithium compounds, aluminum, copper and graphite, the separation rate of aluminum may be 95 to 99% by weight.

In addition, in the method for recycling a waste lithium ion battery comprising lithium compounds, aluminum, copper and graphite, the separation rate of copper may be 75 to 90% by weight.

In addition, in the method for recycling a waste lithium ion battery comprising lithium compounds, aluminum, copper and graphite, the separation rate of graphite may be 70 to 95% by weight.

Hereafter, preferred embodiments are proposed to help understand the present disclosure, but the following embodiments just exemplify the present disclosure and the scope of the present disclosure is not limited to the following embodiments. The following embodiments may be appropriately modified and changed by those skilled in the art within the scope of the present disclosure.

### Embodiment 1: Method for recycling of an LFP waste lithium ion battery through a partial melt separation process

200 g of waste LFP battery cells dried after shredding were charged into an alumina crucible and charged into a box furnace, which is a heater, argon was blown in at 2/min to maintain an argon atmosphere inside the furnace, and heating was carried out to 1250°C and maintained for 30 minutes to partially melt the alumina crucible.

Then, after being cooled inside the furnace to 700°C or lower, the alumina crucible was cooled in air to prepare a copper metal, an aluminum-copper alloy and a lithium alloy compound (i.e., aluminum-copper-lithium-iron-phosphorus-oxygen compound).

Afterwards, the prepared mixture of copper metal, aluminum-copper alloy and lithium alloy compound (i.e., aluminum-copper-lithium-iron-phosphorus-oxygen compound) was sieved to 100 um or less to separate graphite from the mixture. The separated substances were subjected to ICP analysis.

Here, the separation rate of lithium was 97% by weight.

In addition, the separation rate of iron was 93% by weight.

In addition, the separation rate of aluminum was 99% by weight.

In addition, the separation rate of copper was 85% by weight.

In addition, the separation rate of graphite was 84% by weight.

In addition, the photographs of the mixture of copper metal, aluminum-copper alloy and lithium alloy compound (i.e., aluminum-copper-lithium-iron-phosphorus-oxygen compound), and graphite separated from each other are shown in FIG. 7.

FIG. 7 shows photographs of (a) a mixture of a lithium alloy compound, a Cu metal and an Al-Cu alloy separated by sieving, and (b) graphite separated by sieving, in the method of recycling of an LFP-based waste lithium ion battery, comprising a partial melt separation process for lithium alloy compound formation and graphite separation according to Embodiment 1 of the present disclosure.

Referring to FIG. 7A, the mixture of lithium alloy compound, Cu metal, and Al-Cu alloy separated by sieving appeared as a mixture with glossy silver-grey spherical, needle-shaped or rod-shaped porous particles.

In addition, referring to FIG. 7B, the graphite separated by sieving appeared as black particles.

### Embodiment 2: Method for recycling of an NCM waste lithium ion battery through a partial melt separation process

200 g of waste NCM (Li(Ni,Co,Mn)O₂) battery cells dried after shredding were charged into an alumina crucible and charged into a box furnace, which is a heater, and heating was carried out to 900°C in an atmospheric atmosphere and maintained for 120 minutes to partially melt the alumina crucible.

Then, the alumina crucible was cooled in air to prepare a copper metal, an aluminum-copper alloy and a lithium alloy compound (i.e., aluminum-copper-lithium-cobalt-nickel-manganese-oxygen compound).

Afterwards, the prepared mixture of copper metal, aluminum-copper alloy and lithium alloy compound (i.e., aluminum-copper-lithium-cobalt-nickel-manganese-oxygen compound) was sieved to 100 um or less to separate graphite from the mixture. The separated substances were subjected to ICP analysis.

Here, the separation rate of lithium was 95% by weight.

In addition, the separation rate of cobalt was 95% by weight.

In addition, the separation rate of nickel was 95% by weight.

In addition, the separation rate of manganese was 95% by weight.

In addition, the separation rate of aluminum was 95% by weight.

In addition, the separation rate of copper was 75% by weight.

In addition, the separation rate of graphite was 95% by weight.

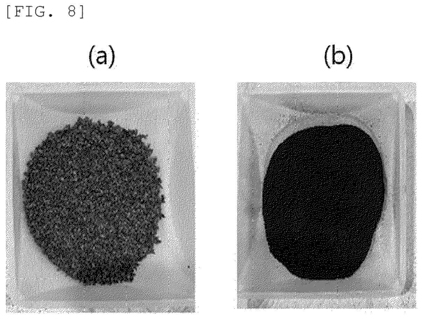

In addition, the photographs of the mixture of copper metal, aluminum-copper alloy and lithium alloy compound (i.e., aluminum-copper-lithium-cobalt-nickel-manganese-oxygen compound), and graphite separated from each other are shown in FIG. 8.

FIG. 8 shows photographs of (a) a mixture of a lithium alloy compound, a Cu metal and an Al-Cu alloy separated by sieving, and (b) graphite separated by sieving, in the method for recycling of an NCM-based waste lithium ion battery, comprising a partial melt separation process for lithium alloy compound formation and graphite separation according to Embodiment 2 of the present disclosure.

Referring to FIG. 8A, the mixture of lithium alloy compound, Cu metal, and Al-Cu alloy separated by sieving appeared as a mixture with glossy black spherical, needle-shaped or rod-shaped porous particles.

In addition, referring to FIG. 8B, the graphite separated by sieving appeared as black particles.

### Embodiment 3: Method for recycling of an NCA waste lithium ion battery through a partial melt separation process

200 g of waste NCA (Li(Ni,Co,Al)O₂) battery cells dried after shredding were charged into an alumina crucible and charged into a box furnace, which is a heater, argon was blown in at 2/min to maintain an argon atmosphere inside the furnace, and heating was carried out to 1050°C and maintained for 60 minutes to partially melt the alumina crucible.

Then, after being cooled inside the furnace to 700°C or lower, the alumina crucible was cooled in air to prepare a copper metal, an aluminum-copper alloy and a lithium alloy compound (i.e., aluminum-copper-lithium-cobalt-nickel-oxygen compound).

Afterwards, the prepared mixture of copper metal, aluminum-copper alloy and lithium alloy compound (i.e., aluminum-copper-lithium-iron-phosphorus-oxygen compound) was sieved to 100 um or less to separate graphite from the mixture. The separated substances were subjected to ICP analysis.

Here, the separation rate of lithium was 98% by weight.

In addition, the separation rate of cobalt was 98% by weight.

In addition, the separation rate of nickel was 97% by weight.

In addition, the separation rate of aluminum was 99% by weight.

In addition, the separation rate of copper was 82% by weight.

In addition, the separation rate of graphite was 88% by weight.

### Embodiment 4 : Method for recycling of an LFP waste lithium ion battery through a partial melt separation process

200 g of waste LFP battery cells dried after shredding and 100 g of aluminum powder with a particle size of 0.1 to 2 mm were charged into an alumina crucible and charged into a box furnace, which is a heater, nitrogen was blown in at 5/min to maintain a nitrogen atmosphere inside the furnace, and heating was carried out to 1250°C and maintained for 30 minutes to partially melt the alumina crucible.

Then, after being cooled inside the furnace to 600°C or lower, the alumina crucible was cooled in air to prepare a copper metal, an aluminum-copper alloy and a lithium alloy compound (i.e., aluminum-copper-lithium-iron-phosphorus-oxygen compound).

Afterwards, the prepared mixture of copper metal, aluminum-copper alloy and lithium alloy compound (i.e., aluminum-copper-lithium-iron-phosphorus-oxygen compound) was sieved to 200 um or less to separate graphite from the mixture. The separated substances were subjected to ICP analysis.

At this time, the particle size of the lithium alloy compound was 0.5 to 1.5 mm.

Here, the separation rate of lithium was 99% by weight.

In addition, the separation rate of iron was 96% by weight.

In addition, the separation rate of aluminum was 98% by weight.

In addition, the separation rate of copper was 90% by weight.

In addition, the separation rate of graphite was 84% by weight.

### Embodiment 5 : Method for recycling of an NCM waste lithium ion battery through a partial melt separation process

200 g of waste NCM (Li(Ni,Co,Mn)O₂) battery cells dried after shredding and 100 g of aluminum powder with a particle size of 0.1 to 2 mm were charged into an alumina crucible and charged into a box furnace, which is a heater, and heating was carried out to 1000°C in an atmospheric atmosphere and maintained for 120 minutes to partially melt the alumina crucible.

Then, the alumina crucible was cooled in air to prepare a copper metal, an aluminum-copper alloy and a lithium alloy compound (i.e., aluminum-copper-lithium-cobalt-nickel-manganese-oxygen compound).

Afterwards, the prepared mixture of copper metal, aluminum-copper alloy and lithium alloy compound (i.e., aluminum-copper-lithium-cobalt-nickel-manganese-oxygen compound) was sieved to 200 µm or less to separate graphite from the mixture. The separated substances were subjected to ICP analysis.

At this time, the particle size of the lithium alloy compound was 3.0 to 4.0 mm.

Here, the separation rate of lithium was 98% by weight.

In addition, the separation rate of cobalt was 97% by weight.

In addition, the separation rate of nickel was 98% by weight.

In addition, the separation rate of manganese was 97% by weight.

In addition, the separation rate of aluminum was 96% by weight.

In addition, the separation rate of copper was 80% by weight.

In addition, the separation rate of graphite was 910 by weight.

### <Embodiment 6> Method for recycling of an NCA waste lithium ion battery through a partial melt separation process

200 g of waste NCA (Li(Ni,Co,Al)O₂) battery cells dried after shredding and 100 g of aluminum powder with a particle size of 0.1 to 2 mm were charged into an alumina crucible and charged into a box furnace, which is a heater, nitrogen was blown in at 5/min to maintain a nitrogen atmosphere inside the furnace, and heating was carried out to 900°C and maintained for 360 minutes to partially melt the alumina crucible.

Then, after being cooled inside the furnace to 900°C or lower, the alumina crucible was cooled in air to prepare a copper metal, an aluminum-copper alloy and a lithium alloy compound (i.e., aluminum-copper-lithium-cobalt-nickel-oxygen compound).

Afterwards, the prepared mixture of copper metal, aluminum-copper alloy and lithium alloy compound (i.e., aluminum-copper-lithium-iron-phosphorus-oxygen compound) was sieved to 200 um or less to separate graphite from the mixture. The separated substances were subjected to ICP analysis.

At this time, the particle size of the lithium alloy compound was 0.2 to 3.0 mm.

Here, the separation rate of lithium was 95% by weight.

In addition, the separation rate of cobalt was 96% by weight.

In addition, the separation rate of nickel was 95% by weight.

In addition, the separation rate of aluminum was 95% by weight.

In addition, the separation rate of copper was 78% by weight.

In addition, the separation rate of graphite was 92% by weight.

### Embodiment 7 : Method for recycling of an LFP waste lithium ion battery through a partial melt separation process

200 g of waste LFP battery cells dried after shredding and 100 g of copper powder with a particle size of 3 to 10 mm were charged into an alumina crucible and charged into a box furnace, which is a heater, argon was blown in at 2/min to maintain an argon atmosphere inside the furnace, and heating was carried out to 1100°C and maintained for 10 minutes to partially melt the alumina crucible.

Then, after being cooled inside the furnace to 700°C or lower, the alumina crucible was cooled in air to prepare a copper metal, an aluminum-copper alloy and a lithium alloy compound (i.e., aluminum-copper-lithium-iron-phosphorus-oxygen compound).

Afterwards, the prepared mixture of copper metal, aluminum-copper alloy and lithium alloy compound (i.e., aluminum-copper-lithium-iron-phosphorus-oxygen compound) was sieved to 30 µm or less to separate graphite from the mixture. The separated substances were subjected to ICP analysis.

At this time, the particle size of the lithium alloy compound was 1.0 to 3.0 mm.

Here, the separation rate of lithium was 96% by weight.

In addition, the separation rate of iron was 90% by weight.

In addition, the separation rate of aluminum was 95% by weight.

In addition, the separation rate of copper was 75% by weight.

In addition, the separation rate of graphite was 90% by weight.

### Embodiment 8 : Method for recycling of an NCM waste lithium ion battery through a partial melt separation process

200 g of waste NCM (Li(Ni,Co,Mn)O₂) battery cells dried after shredding and 100 g of copper powder with a particle size of 3 to 10 mm were charged into an alumina crucible and charged into a box furnace, which is a heater, and heating was carried out to 1200°C in an atmospheric atmosphere and maintained for 20 minutes to partially melt the alumina crucible.

Then, the alumina crucible was cooled in air to prepare a copper metal, an aluminum-copper alloy and a lithium alloy compound (i.e., aluminum-copper-lithium-cobalt-nickel-manganese-oxygen compound).

Afterwards, the prepared mixture of copper metal, aluminum-copper alloy and lithium alloy compound (i.e., aluminum-copper-lithium-cobalt-nickel-manganese-oxygen compound) was sieved to 30 um or less to separate graphite from the mixture. The separated substances were subjected to ICP analysis.

At this time, the particle size of the lithium alloy compound was 3.5 to 5.0 mm.

Here, the separation rate of lithium was 99% by weight.

In addition, the separation rate of cobalt was 99% by weight.

In addition, the separation rate of nickel was 99% by weight.

In addition, the separation rate of manganese was 99% by weight.

In addition, the separation rate of aluminum was 99% by weight.

In addition, the separation rate of copper was 75% by weight.

In addition, the separation rate of graphite was 74% by weight.

### Embodiment 9 : Method for recycling of an NCA waste lithium ion battery through a partial melt separation process

200 g of waste NCA (Li(Ni,Co,Al)O₂) battery cells dried after shredding and 100 g of copper powder with a particle size of 3 to 10 mm were charged into an alumina crucible and charged into a box furnace, which is a heater, argon was blown in at 2/min to maintain an argon atmosphere inside the furnace, and heating was carried out to 1150°C and maintained for 60 minutes to partially melt the alumina crucible.

Then, after being cooled inside the furnace to 700°C or lower, the alumina crucible was cooled in air to prepare a copper metal, an aluminum-copper alloy and a lithium alloy compound (i.e., aluminum-copper-lithium-cobalt-nickel-oxygen compound).

Afterwards, the prepared mixture of copper metal, aluminum-copper alloy and lithium alloy compound (i.e., aluminum-copper-lithium-iron-phosphorus-oxygen compound) was sieved to 30 µm or less to separate graphite from the mixture. The separated substances were subjected to ICP analysis.

At this time, the particle size of the lithium alloy compound was 0.2 to 2.5 mm.

Here, the separation rate of lithium was 98% by weight.

In addition, the separation rate of cobalt was 99% by weight.

In addition, the separation rate of nickel was 99% by weight.

In addition, the separation rate of aluminum was 99% by weight.

In addition, the separation rate of copper was 77% by weight.

In addition, the separation rate of graphite was 85% by weight.

### Embodiment 10: Method for recycling of an LFP waste lithium ion battery through a partial melt separation process

200 g of waste LFP battery cells and 100 g of waste LFP battery cases dried after shredding were charged into an alumina crucible and charged into a box furnace, which is a heater, argon was blown in at 2/min to maintain an argon atmosphere inside the furnace, and heating was carried out to 1250°C and maintained for 30 minutes to partially melt the alumina crucible.

Then, after being cooled inside the furnace to 700°C or lower, the alumina crucible was cooled in air to prepare a copper metal, an aluminum-copper alloy and a lithium alloy compound (i.e., aluminum-copper-lithium-iron-phosphorus-oxygen compound).

Afterwards, the prepared mixture of copper metal, aluminum-copper alloy and lithium alloy compound (i.e., aluminum-copper-lithium-iron-phosphorus-oxygen compound) was sieved to 100 um or less to separate graphite from the mixture. The separated substances were subjected to ICP analysis.

At this time, the particle size of the lithium alloy compound was 2.5 to 3.5 mm.

Here, the separation rate of lithium was 97% by weight.

In addition, the separation rate of iron was 94% by weight.

In addition, the separation rate of aluminum was 99% by weight.

In addition, the separation rate of copper was 86% by weight.

In addition, the separation rate of graphite was 84% by weight.

### Embodiment 11: Method for recycling of an NCM waste lithium ion battery through a partial melt separation process

200 g of waste NCM (Li(Ni,Co,Mn)O₂) battery cells and 100 g of waste NCM (Li(Ni,Co,Mn)O₂) battery cases dried after shredding were charged into an alumina crucible and charged into a box furnace, which is a heater, and heating was carried out to 900°C in an atmospheric atmosphere and maintained for 120 minutes to partially melt the alumina crucible.

Then, the alumina crucible was cooled in air to prepare a copper metal, an aluminum-copper alloy and a lithium alloy compound (i.e., aluminum-copper-lithium-cobalt-nickel-manganese-oxygen compound).

Afterwards, the prepared mixture of copper metal, aluminum-copper alloy and lithium alloy compound (i.e., aluminum-copper-lithium-cobalt-nickel-manganese-oxygen compound) was sieved to 100 µm or less to separate graphite from the mixture. The separated substances were subjected to ICP analysis.

Here, the particle size of the lithium alloy compound was 3.5 to 4.5 mm.

In addition, the separation rate of lithium was 95% by weight.

In addition, the separation rate of cobalt was 95% by weight.

In addition, the separation rate of nickel was 96% by weight.

In addition, the separation rate of manganese was 95% by weight.

In addition, the separation rate of aluminum was 96% by weight.

In addition, the separation rate of copper was 76% by weight.

In addition, the separation rate of graphite was 95% by weight.

### Embodiment 12: Method for recycling of an NCA waste lithium ion battery through a partial melt separation process

200 g of waste NCA (Li(Ni,Co,Al)O₂) battery cells and 100 g of waste NCA (Li(Ni,Co,Al)O₂) battery cases dried after shredding were charged into an alumina crucible and charged into a box furnace, which is a heater, argon was blown in at 2/min to maintain an argon atmosphere inside the furnace, and heating was carried out to 1050°C and maintained for 60 minutes to partially melt the alumina crucible.

Then, after being cooled inside the furnace to 700°C or lower, the alumina crucible was cooled in air to prepare a copper metal, an aluminum-copper alloy and a lithium alloy compound (i.e., aluminum-copper-lithium-cobalt-nickel-oxygen compound).

Afterwards, the prepared mixture of copper metal, aluminum-copper alloy and lithium alloy compound (i.e., aluminum-copper-lithium-iron-phosphorus-oxygen compound) was sieved to 100 um or less to separate graphite from the mixture. The separated substances were subjected to ICP analysis.

Here, the particle size of the lithium alloy compound was 1.5 to 2.5 mm.

In addition, the separation rate of lithium was 98% by weight.

In addition, the separation rate of cobalt was 98% by weight.

In addition, the separation rate of nickel was 97% by weight.

In addition, the separation rate of aluminum was 99% by weight.

In addition, the separation rate of copper was 82% by weight.

In addition, the separation rate of graphite was 88% by weight.

### Embodiment 13: Method for recycling of an NCA waste lithium ion battery through a partial melt separation process

200 g of waste NCA (Li(Ni,Co,Al)O₂) battery cells dried after shredding and 100 g of aluminum powder with a particle size of 0.1 to 2 mm were charged into an alumina crucible and charged into a box furnace, which is a heater, argon was blown in at 2/min to maintain an argon atmosphere inside the furnace, and heating was carried out to 1050°C and maintained for 60 minutes to partially melt the alumina crucible.

Then, after being cooled inside the furnace to 700°C or lower, the alumina crucible was cooled in air to prepare a copper metal, an aluminum-copper alloy and a lithium alloy compound (i.e., aluminum-copper-lithium-cobalt-nickel-oxygen compound).

Afterwards, the prepared mixture of copper metal, aluminum-copper alloy and lithium alloy compound (i.e., aluminum-copper-lithium-iron-phosphorus-oxygen compound) was sieved to 100 µm or less to separate graphite from the mixture. The separated substances were subjected to ICP analysis.

Here, the separation rate of lithium was 98% by weight.

In addition, the separation rate of cobalt was 98% by weight.

In addition, the separation rate of nickel was 97% by weight.

In addition, the separation rate of aluminum was 99% by weight.

In addition, the separation rate of copper was 82% by weight.

In addition, the separation rate of graphite was 88% by weight.

### Embodiment 14: Method for recycling of an LFP waste lithium ion battery through a partial melt separation process

200 g of waste LFP battery cells and 100 g of waste LFP battery cases dried after shredding and 100 g of aluminum powder with a particle size of 0.1 to 2 mm were charged into an alumina crucible and charged into a box furnace, which is a heater, nitrogen was blown in at 5/min to maintain a nitrogen atmosphere inside the furnace, and heating was carried out to 1250°C and maintained for 30 minutes to partially melt the alumina crucible.

Then, after being cooled inside the furnace to 600°C or lower, the alumina crucible was cooled in air to prepare a copper metal, an aluminum-copper alloy and a lithium alloy compound (i.e., aluminum-copper-lithium-iron-phosphorus-oxygen compound).

Afterwards, the prepared mixture of copper metal, aluminum-copper alloy and lithium alloy compound (i.e., aluminum-copper-lithium-iron-phosphorus-oxygen compound) was sieved to 200 um or less to separate graphite from the mixture. The separated substances were subjected to ICP analysis.

Here, the separation rate of lithium was 99% by weight.

In addition, the separation rate of iron was 96% by weight.

In addition, the separation rate of aluminum was 98% by weight.

In addition, the separation rate of copper was 90% by weight.

In addition, the separation rate of graphite was 84% by weight.

### Embodiment 15: Method for recycling of an NCM waste lithium ion battery through a partial melt separation process

200 g of waste NCM (Li(Ni,Co,Mn)O₂) battery cells and 100 g of waste NCM (Li(Ni,Co,Mn)O₂) battery cases dried after shredding and 100 g of aluminum powder with a particle size of 0.1 to 2 mm were charged into an alumina crucible and charged into a box furnace, which is a heater, and heating was carried out to 1000°C in an atmospheric atmosphere and maintained for 120 minutes to partially melt the alumina crucible.

Then, the alumina crucible was cooled in air to prepare a copper metal, an aluminum-copper alloy and a lithium alloy compound (i.e., aluminum-copper-lithium-cobalt-nickel-manganese-oxygen compound).

Afterwards, the prepared mixture of copper metal, aluminum-copper alloy and lithium alloy compound (i.e., aluminum-copper-lithium-cobalt-nickel-manganese-oxygen

compound) was sieved to 200 µm or less to separate graphite from the mixture. The separated substances were subjected to ICP analysis.

Here, the separation rate of lithium was 98% by weight.

In addition, the separation rate of cobalt was 97% by weight.

In addition, the separation rate of nickel was 98% by weight.

In addition, the separation rate of manganese was 97% by weight.

In addition, the separation rate of aluminum was 96% by weight.

In addition, the separation rate of copper was 80% by weight.

In addition, the separation rate of graphite was 910 by weight.

### Embodiment 16: Method for recycling of an NCA waste lithium ion battery through a partial melt separation process

200 g of waste NCA (Li(Ni,Co,Al)O₂) battery cells and 100 g of waste NCA (Li(Ni,Co,Al)O₂) battery cases dried after shredding and 100 g of aluminum powder with a particle size of 0.1 to 2 mm were charged into an alumina crucible and charged into a box furnace, which is a heater, nitrogen was blown in at 5/min to maintain a nitrogen atmosphere inside the furnace, and heating was carried out to 900°C and maintained for 360 minutes to partially melt the alumina crucible.

Then, after being cooled inside the furnace to 900°C or lower, the alumina crucible was cooled in air to prepare a copper metal, an aluminum-copper alloy and a lithium alloy compound (i.e., aluminum-copper-lithium-cobalt-nickel-oxygen compound).

Afterwards, the prepared mixture of copper metal, aluminum-copper alloy and lithium alloy compound (i.e., aluminum-copper-lithium-iron-phosphorus-oxygen compound) was sieved to 200 um or less to separate graphite from the mixture. The separated substances were subjected to ICP analysis.

Here, the separation rate of lithium was 95% by weight.

In addition, the separation rate of cobalt was 96% by weight.

In addition, the separation rate of nickel was 95% by weight.

In addition, the separation rate of aluminum was 95% by weight.

In addition, the separation rate of copper was 78% by weight.

In addition, the separation rate of graphite was 92% by weight.

### Embodiment 17: Method for recycling of an NCA waste lithium ion battery through a partial melt separation process

200 g of waste NCA (Li(Ni,Co,Al)O₂) battery cells and 100 g of waste NCA (Li(Ni,Co,Al)O₂) battery cases dried after shredding and 100 g of aluminum powder with a particle size of 3 to 10 mm were charged into an alumina crucible and charged into a box furnace, which is a heater, argon was blown in at 2/min to maintain an argon atmosphere inside the furnace, and heating was carried out to 1150°C and maintained for 60 minutes to partially melt the alumina crucible.

Then, after being cooled inside the furnace to 700°C or lower, the alumina crucible was cooled in air to prepare a copper metal, an aluminum-copper alloy and a lithium alloy compound (i.e., aluminum-copper-lithium-cobalt-nickel-oxygen compound).

Afterwards, the prepared mixture of copper metal, aluminum-copper alloy and lithium alloy compound (i.e., aluminum-copper-lithium-iron-phosphorus-oxygen compound) was sieved to 30 µm or less to separate graphite from the mixture. The separated substances were subjected to ICP analysis.

Here, the separation rate of lithium was 98% by weight.

In addition, the separation rate of cobalt was 99% by weight.

In addition, the separation rate of nickel was 99% by weight.

In addition, the separation rate of aluminum was 99% by weight.

In addition, the separation rate of copper was 77% by weight.

In addition, the separation rate of graphite was 85% by weight.

### Comparative Example 1: Method for recycling of an LFP waste lithium ion battery through a dry process

200 g of waste LFP battery cells dried after shedding were recycled using dry melting and reduction volatilization methods.

Here, graphite and aluminum could not be recovered, and an atomizing process that required a lot of energy was needed to recover lithium, copper or iron. In addition, there were problems in that a large amount of slag forming agents such as CaO and SiO₂ for improving the fluidity of slag, and a large amount of CaCl₂ or CaF₂ for recovering lithium as dust were needed, making the process cost very expensive.

### Comparative Example 2: Method for recycling of an NCM waste lithium ion battery through a dry process

200 g of waste NCM battery cells dried after shedding were recycled using dry melting and reduction volatilization methods.

Here, graphite and aluminum could not be recovered, and an atomizing process that required a lot of energy was needed recover lithium, nickel, cobalt, manganese or copper. In addition, there were problems in that a large amount of slag forming agents such as CaO and SiO₂ for improving the fluidity of slag, and a large amount of CaCl₂ or CaF₂ for recovering lithium as dust were needed, making the process cost very expensive.

### Comparative Example 3: Method for recycling of an NCA waste lithium ion battery through a dry process

200 g of waste NCA battery cells dried after shedding were recycled using dry melting and reduction volatilization methods.

Here, graphite and aluminum could not be recovered, and an atomizing process that required a lot of energy was needed recover lithium, nickel, cobalt or copper. In addition, there were problems in that a large amount of slag forming agents such as CaO and SiO₂ for improving the fluidity of slag, and a large amount of CaCl₂ or CaF₂ for recovering lithium as dust were needed, making the process cost very expensive.

Therefore, the methods of Embodiments 1 to 17 recovered more graphite than the methods of Comparative Examples 1 to 3, thereby reducing carbon dioxide emissions and recovering more aluminum. In addition, the methods of Embodiments 1 to 17 did not require an atomizing crushing process which formed non-porous bulk particles, and did not require additional slag forming agents and volatilizing agents such that there was no discharge of slag, which is a secondary waste.

Embodiments about a method for recycling a waste lithium ion battery, a method for smart recycling a waste lithium ion battery, and a system for smart recycling a waste lithium ion battery, comprising a partial melt separation process for lithium alloy compound formation and graphite separation according to the present disclosure were described above, but it is apparent that various modifications may be achieved without departing from the scope of the present disclosure.

Therefore, the scope of the present disclosure should not be limited to the embodiment(s) and should be determined by not only the following claims, but equivalents of the claims.

That is, it should be understood that the embodiments described above are not limitative, but only examples in all respects, the scope of the present disclosure is expressed by claims described below, not the detailed description, and it should be construed that all of changes and modifications achieved from the meanings and scope of claims and equivalent concept are included in the scope of the present disclosure.

## Claims

1. A method for recycling a waste lithium ion battery, comprising a partial melt separation process for lithium alloy compound formation and graphite separation, wherein the partial melt separation process comprises:
preparing a mixture of a lithium alloy compound in which lithium compounds, aluminum and copper are partially melted, a copper metal and an aluminum-copper alloy from waste lithium ion battery cell shreds, discharged waste lithium ion battery cells or waste lithium ion battery cases which comprise lithium compounds, aluminum, copper and graphite; and
physically separating the graphite from the mixture of the lithium alloy compound, the copper metal and the aluminum-copper alloy.

2. The method for recycling a waste lithium ion battery, comprising a partial melt separation process for lithium alloy compound formation and graphite separation according to claim 1,
wherein the method comprises adding metal powder such as aluminum powder or copper powder to the mixture to partially melt same in the process of preparing the lithium alloy compound.

3. The method for recycling a waste lithium ion battery, comprising a partial melt separation process for lithium alloy compound formation and graphite separation according to claim 2,
wherein the particle size of the metal powder such as aluminum powder or copper powder is 0.1 to 10 mm.

4. The method for recycling a waste lithium ion battery, comprising a partial melt separation process for lithium alloy compound formation and graphite separation according to claim 1,
wherein the lithium alloy compound is at least one selected from the group consisting of aluminum-copper-lithium-iron-phosphorus-oxygen compound, aluminum-copper-lithium-cobalt-nickel-manganese-oxygen compound, aluminum-copper-lithium-cobalt-nickel-oxygen compound, aluminum-copper-manganese-oxygen compound, and aluminum-copper-lithium-cobalt-oxygen compound.

5. The method for recycling a waste lithium ion battery, comprising a partial melt separation process for lithium alloy compound formation and graphite separation according to claim 1,
wherein the mixture of the lithium alloy compound, copper metal and aluminum-copper alloy has spherical, needle-shaped or rod-shaped porous particles, and
the particle size of the mixture of the lithium alloy compound, copper metal and aluminum-copper alloy is 20 um to 5 mm.

6. The method for recycling a waste lithium ion battery, comprising a partial melt separation process for lithium alloy compound formation and graphite separation according to claim 1,
wherein the partial melt separation process comprises:
charging waste lithium ion battery cell shreds, discharged waste lithium ion battery cells or waste lithium ion battery cases which comprise lithium compounds, aluminum, copper and graphite into a melting furnace to prepare a mixture of a lithium alloy compound in which the lithium compounds, aluminum and copper are partially melted, a copper metal and an aluminum-copper alloy; and
separating the graphite from the mixture of the lithium alloy compound, copper metal and aluminum-copper alloy by physical methods such as gravity selection, sieving and air suspension.

7. A method for recycling a waste lithium ion battery, comprising a partial melt separation process for lithium alloy compound formation and graphite separation,
wherein the waste lithium ion battery comprises lithium compounds, aluminum, copper and graphite, and
wherein the method comprises:
(a-1) preparing waste lithium ion battery cell shreds, discharged waste lithium ion battery cells or waste lithium ion battery cases;
(a-2) charging the waste lithium ion battery cell shreds, discharged waste lithium ion battery cells or waste lithium ion battery cases into a melting furnace under air or an inert gas, followed by heating, to prepare a mixture of a lithium alloy compound in which lithium compounds, aluminum and copper are partially melted, a copper metal and an aluminum-copper alloy; and
(a-3) separating the graphite from the mixture of the lithium alloy compound, copper metal and aluminum-copper alloy by physical methods such as gravity selection, sieving and air suspension.

8. The method for recycling a waste lithium ion battery, comprising a partial melt separation process for lithium alloy compound formation and graphite separation according to claim 7,
wherein, in the step of (a-1) preparing waste lithium ion battery cell shreds, discharged waste lithium ion battery cells or waste lithium ion battery cases,
waste lithium ion battery cells are shredded by a jaw crusher, a cone crusher, a rod mill, a pin mill, a ball mill, a tube mill, a pot mill, a roller mill, a turbo mill or a tower mill, under an inert gas to prepare the waste lithium ion battery cell shreds, and
waste lithium ion batteries are discharged in water to prepare the discharged waste lithium ion battery cells.

9. The method for recycling a waste lithium ion battery, comprising a partial melt separation process for lithium alloy compound formation and graphite separation according to claim 7,
wherein, in the step of (a-1) preparing waste lithium ion battery cell shreds, discharged waste lithium ion battery cells or waste lithium ion battery cases,
metal powder such as aluminum powder or copper powder are added to the waste lithium ion battery cell shreds, discharged waste lithium ion battery cells or waste lithium ion battery cases, and
the particle size of the metal powder such as aluminum powder or copper powder is 0.1 to 10 mm.

10. The method for recycling a waste lithium ion battery, comprising a partial melt separation process for lithium alloy compound formation and graphite separation according to claim 7,
wherein, in the step of (a-2) charging the waste lithium ion battery cell shreds, discharged waste lithium ion battery cells or waste lithium ion battery cases into a melting furnace under air or an inert gas, followed by heating, to prepare a mixture of a lithium alloy compound in which lithium compounds, aluminum and copper are partially melted, a copper metal and an aluminum-copper alloy,
the inert gas is nitrogen, argon or neon,
the heating temperature of the melting furnace is 900 °C to 1250 °C, and
the heating time of the melting furnace is 10 minutes to 6 hours.

11. The method for recycling a waste lithium ion battery, comprising a partial melt separation process for lithium alloy compound formation and graphite separation according to claim 7,
wherein, in the step of (a-3) separating the graphite from the mixture of the lithium alloy compound, copper metal and aluminum-copper alloy by physical methods such as gravity selection, sieving and air suspension,
the size of the sieve net during the sieving process is 20 um to 210 µm.

12. The method for recycling a waste lithium ion battery, comprising a partial melt separation process for lithium alloy compound formation and graphite separation according to claim 7,
wherein the method further comprises, in the step of (a-3),
the step of (a-4) shredding and crushing the mixture of the lithium alloy compound, copper metal and aluminum-copper alloy by using a jaw crusher, a cone crusher, a rod mill, a pin mill, a ball mill, a tube mill, a pot mill, a roller mill, a turbo mill or a tower mill such that the mixture has a particle size of 20 um to 5 mm.

13. A method for smart recycling a waste lithium ion battery, comprising a partial melt separation process for lithium alloy compound formation and graphite separation,
wherein the partial melt separation process comprises:
preparing a mixture of a lithium alloy compound in which lithium compounds, aluminum and copper are partially melted, a copper metal and an aluminum-copper alloy from waste lithium ion battery cell shreds, discharged waste lithium ion battery cells or waste lithium ion battery cases which comprise lithium compounds, aluminum, copper and graphite; and
physically separating the graphite from the mixture of the lithium alloy compound, the copper metal and the aluminum-copper alloy, and
wherein the particle size of the mixture of the lithium alloy compound, copper metal and aluminum-copper alloy may be 20 um to 5 mm.

14. A method for dry-recycling a waste lithium ion battery, comprising a partial melt separation process for physical separation of graphite from a mixture of a lithium alloy compound, a copper metal and an aluminum-copper alloy,
wherein metal powder such as aluminum powder or copper powder is added to the mixture to partially melt same in the process of preparing the lithium alloy compound.

15. A system for smart recycling a waste lithium ion battery, comprising
a crucible into which waste lithium ion battery cell shreds, discharged waste lithium ion battery cells or waste lithium ion battery cases which comprise lithium compounds, aluminum, copper and graphite are charged;
a heater in which the crucible is installed; and
a heating furnace in which the heater is charged and the waste lithium ion battery cell shreds, discharged waste lithium ion battery cells or waste lithium ion battery cases which comprise the lithium compounds, aluminum, copper and graphite are heated,
wherein a mixture of a lithium alloy compound in which the lithium compounds, aluminum and copper are partially melted, a copper metal and an aluminum-copper alloy is formed in the heating furnace, and
when cooled, the mixture of the lithium alloy compound, copper metal and aluminum-copper alloy, and the graphite are physically separated.
